# EUROPEAN PATENT APPLICATION

(11) **EP 4 455 979 A1**
(43) Date of publication of application: **30.10.2024**
(21) Application number: 21968816.5
(22) Date of filing: 20.12.2021
(51) Int. Cl.: G06Q 50/10

(54) **NFT UNIQUENESS ENSURING PROGRAM, NFT UNIQUENESS ENSURING METHOD, AND NFT UNIQUENESS ENSURING DEVICE**

(71) Applicant: FUJITSU LIMITED, Kawasaki-shi, Kanagawa 211-8588 (JP)
(72) Inventor: KAYABA, Keita, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2021/047095
(87) International publication number: WO 2023/119379

(57) **Abstract**

An NFT uniqueness ensuring device (100) stores, in a DB (103), information as existing NFT associated data (Dx) associated with an NFT already issued on a blockchain. An NFT associated data generation unit (101) combines on-chain data (D1) recorded in the NFT with the off-chain data (D2) identified by the on-chain data (D1), to generate the latest NFT associated data (D3). When a new NFT is issued by a PF (111), a duplication determination unit (102) compares the data content of the NFT associated data (D3) of the new NFT to be issued with the data content of the existing NFT associated data (Dx), determines presence or absence of duplication between the NFT associated data (D3) of the new NFT and the existing NFT associated data (Dx), and transmits a determination result to the PF (111).

## Description

### TECHNICAL FIELD

The present invention relates to an NFT uniqueness ensuring program, an NFT uniqueness ensuring method, and an NFT uniqueness ensuring device.

### BACKGROUND ART

In recent years, in the blockchain (BC) field, there is increasing attention being paid to non-fungible tokens (NFTs) that are not to be substituted for other tokens and maintain uniqueness. In the description below, an NFT is defined as "unique data on a blockchain that can identify (or be associated with) something or someone". Specifically, there are NFTs of image data, NFTs of HTML pages such as Tweets, and the like, for example. An NFT that has been issued on a platform PF (nPF, n standing for NFT) or the like that issues NFTs is traded between nPFs or individuals.

NFTs include an on-chain NFT that records identification target data (on-chain data) in its own NFT (token), and an off-chain NFT that records, in its own NFT, an identifier of identification target data (off-chain data) on an off-chain outside its own NFT.

For example, there is an HEXA method for NFT issuance at an existing nPF (see Non-Patent Document 1 below, for example). By the HEXA method, NFT-related information is recorded in a database (DB), and an NFT in which an HEXA NFT card indicating a link or the like to the NFT-related information is recorded is issued. Thus, it is possible to distinguish afterward whether an issued NFT is a replicated NFT, and uniqueness of the NFT is ensured by preventing issuance of a replicated NFT.

In addition to this, conventional techniques include a technique by which an application checks validity of blockchain data downloaded from a peer, for example, and a node application maintains and constructs a database, to ensure uniqueness of NFTs. Also, there is a technique for issuing and sharing, as an NFT, execution subject information, a transaction execution function generated by receiving a transaction execution request by an execution subject from a transaction subject and determining whether the execution request specifies the execution subject, and information about an asset transfer history. (See Patent Documents 1 and 2 below, for example)

### CITATION LIST

### PATENT DOCUMENTS

Patent Document 1: U.S. Patent No. 9875510
Patent Document 2: International Publication Pamphlet No. WO 2020/255372

### NON-PATENT DOCUMENT

Non-Patent Document 1: "Mechanism of HEXA NFT", [online], HEXA, [retrieved on November 10, 2021], Internet <https://hexanft.com/hexanftstructure/>

### SUMMARY OF INVENTION

### TECHNICAL PROBLEM

By conventional techniques, the NFT replication problem has not been solved. For example, in an on-chain NFT, it is possible to issue a replicated NFT by copying gene data recorded in the NFT. Also, in an off-chain NFT, it is possible to issue a replicated NFT by copying a Tweet or an identifier (URL) of an image recorded in the NFT. Since the uniqueness of NFTs is a major feature of NFTs, there is the need in the NFT industry for a mechanism to prevent issuance of replicated NFTs.

More specifically, by a conventional technique such as HEXA, it is not possible to directly prevent issuance of a replicated NFT, and the uniqueness of an NFT is not ensured beforehand at the time of issuance the NFT. Also, it is not possible to detect variation in off-chain data (such as deletion or change in an image at a URL destination, for example), and the uniqueness of an NFT is not ensured safely due to variation in off-chain data.

In one aspect, an object of the present invention is to directly prevent issuance of replicated NFTs.

### SOLUTION TO PROBLEM

According to an aspect of the embodiments, it is required to perform a first determination process of storing information associated with a non-fungible token (NFT) already issued on a blockchain as existing NFT associated data in a storage unit, comparing the data content of the NFT associated data of a new NFT to be issued with the data content of the existing NFT associated data at the time of issuance of the new NFT, and determining presence or absence of duplication between the new NFT associated data and the existing NFT associated data.

### ADVANTAGEOUS EFFECTS OF INVENTION

According to an aspect of the present invention, it is possible to directly prevent issuance of replicated NFTs.

### BRIEF DESCRIPTION OF DRAWINGS

FIG. 1 is a schematic explanatory diagram of Example 1 of an NFT uniqueness ensuring method according to an embodiment.
FIG. 2 is an explanatory diagram of an outline of NFT issuance.
FIG. 3A is an explanatory diagram of an on-chain NFT and an off-chain NFT.
FIG. 3B is an explanatory diagram of a specific example of an on-chain NFT.
FIG. 4 is an explanatory diagram of a replicated NFT.
FIG. 5 is a schematic explanatory diagram of Example 2 of an NFT uniqueness ensuring method according to an embodiment.
FIG. 6 is an explanatory diagram in which the content of off-chain data changes in noise.
FIG. 7 is a diagram illustrating an example of the hardware configuration of an NFT uniqueness ensuring device.
FIG. 8A is a flowchart illustrating an example of a process according to Example 1 of an NFT uniqueness ensuring device. (part 1)
FIG. 8B is a flowchart illustrating an example of a process according to Example 1 of an NFT uniqueness ensuring device. (part 2)
FIG. 9 is an explanatory diagram of a specific example of extraction of unchanged portions by difference comparison of off-chain data.
FIG. 10A is a flowchart illustrating an example of a process according to Example 2 of an NFT uniqueness ensuring device. (part 1)
FIG. 10B is a flowchart illustrating an example of a process according to Example 2 of an NFT uniqueness ensuring device. (part 2)
FIG. 11 is a flowchart illustrating an example of a process in which the processes according to Examples 1 and 2 of the NFT uniqueness ensuring device are integrated.
FIG. 12 is a configuration diagram for explaining a specific process according to Example 1 of the NFT uniqueness ensuring device. (part 1)
FIG. 13A is a flowchart of a specific example of a process according to Example 1 of the NFT uniqueness ensuring device. (part 1)
FIG. 13B is a flowchart of a specific example of a process according to Example 1 of the NFT uniqueness ensuring device. (part 2)
FIG. 13C is a flowchart of a specific example of a process according to Example 1 of the NFT uniqueness ensuring device. (part 3)
FIG. 14 is a flowchart illustrating an example of processing of a function h in NFT associated data generation.
FIG. 15 is an explanatory diagram of a specific example of processing of a function f in duplication determination.
FIG. 16 is a flowchart illustrating an example of a process of duplication determination as to terminal nodes of json format data.
FIG. 17 is a flowchart illustrating details of the process in FIG. 16.
FIG. 18 is a sequence diagram of a specific example of a process according to Example 1 of the NFT uniqueness ensuring device. (part 1)
FIG. 19 is a configuration diagram for explaining a specific process according to Example 1 of the NFT uniqueness ensuring device. (part 2)
FIG. 20 is a sequence diagram of a specific example of a process according to Example 1 of the NFT uniqueness ensuring device. (part 2)
FIG. 21 is a diagram illustrating an example system configuration of Example 1 of the NFT uniqueness ensuring device.
FIG. 22 is a configuration diagram for explaining a specific example of a process according to Example 2 of the NFT uniqueness ensuring device. (part 1)
FIG. 23A is a flowchart of a specific example of a process according to Example 2 of the NFT uniqueness ensuring device. (part 1)
FIG. 23B is a flowchart of a specific example of a process according to Example 2 of the NFT uniqueness ensuring device. (part 2)
FIG. 24 is a configuration diagram for explaining a specific example of a process according to Example 2 of the NFT uniqueness ensuring device. (part 2)
FIG. 25 is a sequence diagram of a specific example of a process according to Example 2 of the NFT uniqueness ensuring device.
FIG. 26 is a diagram illustrating an example system configuration of Example 2 of the NFT uniqueness ensuring device.

### DESCRIPTION OF EMBODIMENTS

In the description below, embodiments of the disclosed NFT uniqueness ensuring program, NFT uniqueness ensuring method, and NFT uniqueness ensuring device will be described in detail, with reference to the drawings.

### (Example 1 of an NFT Uniqueness Ensuring Method According to an Embodiment)

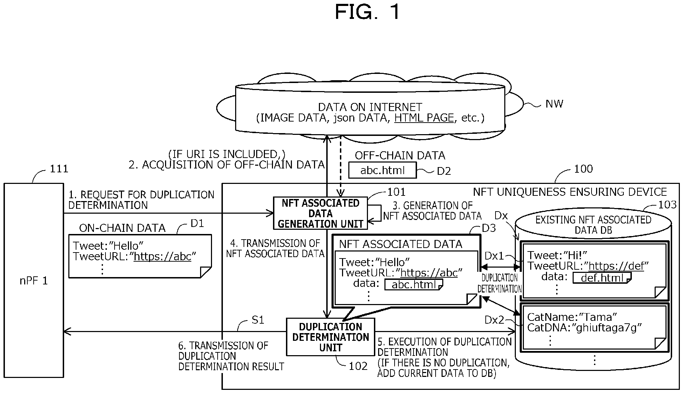

FIG. 1 is a schematic explanatory diagram of Example 1 of an NFT uniqueness ensuring method according to an embodiment. The NFT uniqueness ensuring method according to the embodiment is implemented by a computer that performs a process of ensuring uniqueness of an NFT to be issued. This computer is an NFT uniqueness ensuring device 100 illustrated in FIG. 1, for example.

In the embodiment, data recorded in the NFT in an on-chain NFT, and an identifier recorded in the NFT in an off-chain NFT and data identified by the identifier are collectively referred to as "NFT associated data".

In both Example 1 and Example 2 to be described later, the NFT uniqueness ensuring device 100 according to the embodiment determines whether the NFT associated data to be issued has duplication of the already issued NFT associated data.

The NFT uniqueness ensuring device 100 of Example 1 stores the NFT associated data of the already issued NFTs in the DB, and performs duplication determination between the NFT associated data before issuance and the data in the DB. Issuance of the NFT having the NFT associated data is then permitted only in a case where there is no duplication as a duplication determination result. Thus, uniqueness of the NFT is ensured.

As illustrated in FIG. 1, the NFT uniqueness ensuring device 100 includes an NFT associated data generation unit 101, a duplication determination unit 102, and a storage unit (database: DB) 103. The NFT associated data generation unit 101 and the duplication determination unit 102 function as the control unit of the NFT uniqueness ensuring device 100. The DB 103 stores NFT associated data associated with the NFTs already issued on the blockchain. The NFT uniqueness ensuring device 100 is connected to nPF 1 (111) and a network such as the Internet. The nPF is Opensea, CyptoKitties, or the like, for example.

The NFT uniqueness ensuring device 100 of Example 1 performs the following processes 1. to 6., to ensure uniqueness of the NFT to be issued.
1. The NFT associated data generation unit 101 receives a duplication determination request as to the nPF 1 (111) . Here, at the time of issuance of a new NFT, the nPF 1 (111) requests the NFT uniqueness ensuring device 100 to perform duplication determination as to whether the new NFT has duplication of the existing NFTs. For example, the NFT associated data generation unit 101 receives, from the nPF 1 (111), a request for duplication determination as to on-chain data (a Tweet accompanied by a URL, for example) D1.
2. When the on-chain data D1 includes an URI, the NFT associated data generation unit 101 acquires off-chain data D2 from a network NW. Note that URI is an abbreviation for Uniform Resource Identifier, and URL is an abbreviation for Uniform Resource Locator.
3. The NFT associated data generation unit 101 generates NFT associated data D3 by associating (linking) the on-chain data D1 as to which duplication determination is requested from the nPF 1 (111), with the off-chain data D2 acquired from NW.
4. The NFT associated data generation unit 101 transmits the NFT associated data D3 to the duplication determination unit 102.
5. The duplication determination unit 102 performs a duplication determination process. The duplication determination unit 102 refers to the DB 103, and determines presence or absence of duplication between the data content of the NFT associated data D3 and the data content of the existing NFT associated data Dx (Dx1, Dx2, ...) stored in the DB 103. In a case where the duplication determination unit 102 determines that there is no duplication between the NFT associated data D3 and the existing NFT associated data Dx, the duplication determination unit 102 adds (stores) the NFT associated data D3 into the DB 103. On the other hand, in a case where the duplication determination unit 102 determines that there is duplication between the NFT associated data D3 and the existing NFT associated data Dx, the duplication determination unit 102 does not add (store) the NFT associated data D3 into the DB 103.
6. The duplication determination unit 102 transmits a duplication determination result S1 to the nPF 1 (111).

After that, in a case where the duplication determination result S1 transmitted by the NFT uniqueness ensuring device 100 indicates no duplication, the nPF 1 (111) issues a new NFT.

An example of a duplication determination process using FIG. 1 is now described. The NFT uniqueness ensuring device 100 receives a duplication determination request from the nPF 1 (111). The NFT associated data generation unit 101 acquires, from the network NW, the off-chain data "abc.html" corresponding to a link to the URL "https://abc" of the received on-chain data, and generates the NFT associated data D3. The duplication determination unit 102 determines presence or absence of duplication between the data content of the NFT associated data D3 and the data content of the existing NFT associated data Dx recorded in the DB 103. In the example in FIG. 1, the duplication determination unit 102 performs duplication determination as to a "Tweet" and "TweetURL and link data" of the NFT associated data D3, and transmits a determination result S1 indicating no duplication to the nPF 1 (111).

As described above, according to Example 1, determination as to duplication of the existing NFT associated data is performed prior to NFT issuance, and thus, issuance of a replicated NFT is prevented in advance. Further, the data content has no duplication of the existing NFTs, and uniqueness of the NFT to be newly issued can be ensured.

### (Outline of NFT Issuance and the Like)

Here, an outline of NFT issuance, and difficulties in ensuring uniqueness of an NFT by an existing technology are described.

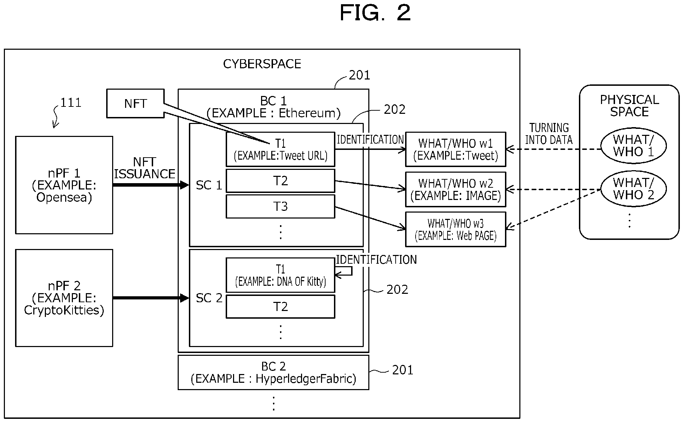

FIG. 2 is an explanatory diagram of an outline of NFT issuance. In a cyberspace illustrated in FIG. 2, nPFs (nPF 1, nPF 2, ...) 111 are NFT issuance platforms, BCs (BC 1, BC 2, ...) 201 are blockchains, SCs (SC 1, SC 2, ...) 202 are smart contracts, and Ts (T1, T2, T3, ...) are tokens.

The user who wishes to issue an NFT requests nPF 111 to issue an NFT. The nPF 111 that has received the request issues an NFT by executing a smart contract (SC) 202 for NFT issuance on a BC 201, which is installed beforehand for NFT issuance. Each NFT is assigned a unique ID on an SC 202, and various kinds of data are associated with this ID and are stored in state 1 of the BC 201. In the example in FIG. 2, T1 is an NFT issued by the SC 1 (202) of the BC 1 (Ethereum) 201 includes the URL of a Tweet, and what/who 1 identified by T1 is associated as a Tweet/identifier (URL) in NW in a physical space.

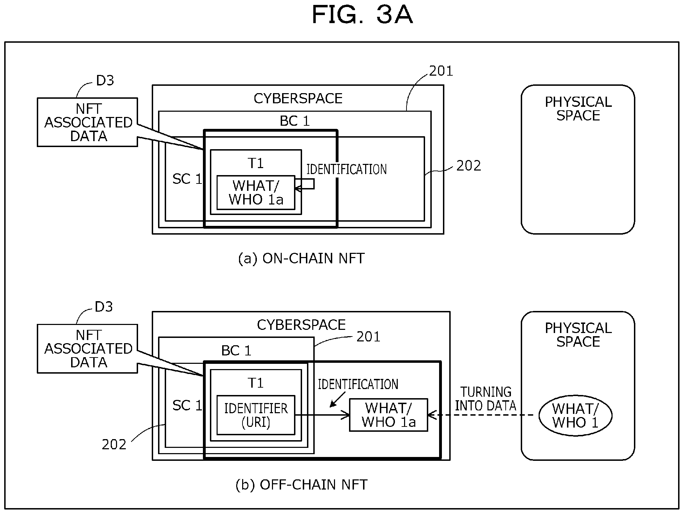

FIG. 3A is an explanatory diagram of an on-chain NFT and an off-chain NFT. An NFT is divided into an on-chain NFT and an off-chain NFT, in terms of the location of data to be identified by the NFT. FIG. 3A(a) is a diagram illustrating an on-chain NFT. The on-chain NFT is an NFT that identifies the identification target data by recording the identification target data as on-chain data that is data recorded in the NFT.

FIG. 3A(b) is a diagram illustrating an off-chain NFT. The off-chain NFT is an NFT that identifies the identifier (URI or the like) of the identification target data (off-chain data) in an off-chain outside the BC 201 by recording the identifier in the NFT.

It is also possible to issue an on-chain and off-chain NFT in which some part of the identification target data is written into the NFT, and some other part of the identification target data is placed outside and its identifier is written into the NFT. In the embodiment, data recorded in the NFT in an on-chain NFT, and an identifier recorded in the NFT in an off-chain NFT and data identified by the identifier are collectively referred to as "NFT associated data" D3. Note that, depending on implementation, the NFT associated data D3 fluctuates after issuance of the NFT (in particular, off-chain data) in some cases, which is regarded as a problem in the NFT industry. To counter this aspect, the NFT uniqueness ensuring device 100 of the embodiment regards the NFT associated data D3, which is a broader concept including on-chain data, as process target.

One of the problems in the current NFT industry is the NFT replication problem. Specifically, the problem lies in that, depending on the implementation of the SCs 202, the NFT associated data D3 can be copied, and is set as the NFT associated data D3 (replicated NFT) of the NFT to be issued by another SC 202.

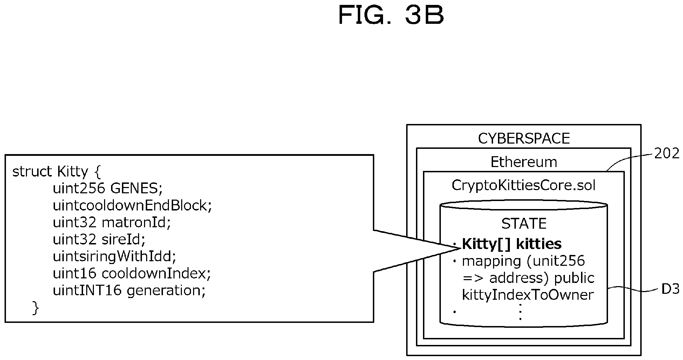

FIG. 3B is an explanatory diagram of a specific example of an on-chain NFT. On-chain data is data other than the identifiers of accounts of the BCs 201 among the data that is associated with the IDs of the tokens and is stored as states on the BCs 201 in the smart contracts (SCs) 202 that manage NFTs. The states mean the data stored on the BCs 201, regardless of the execution statuses of the smart contracts. Examples of the states include world/account states of Ethereum and world states of HLF (HyPerledger Fabric). Examples of the identifiers of the accounts of the BCs 201 include Ethereum account addresses, HLF user IDs, and the like, which are used to store ownerships.

FIG. 3B illustrates a schematic diagram of on-chain data (NFT associated data D3) of an NFT game called CryptoKitties. The SC 202 is CryptoKittiesCore.sol, and the on-chain data is element data of "Kitties", which is a sequence of Kitty structures (the index of the sequence is the token ID). "genes" is determined by mixGenes () of the "GeneScienceInterface" contract whose contract address is not open to public.

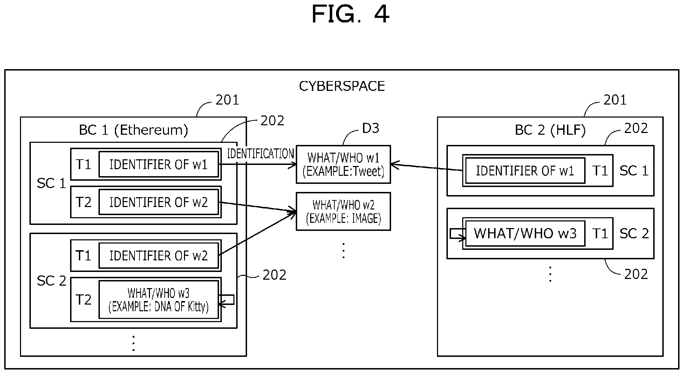

FIG. 4 is an explanatory diagram of a replicated NFT. For example, as for an on-chain NFT, it is possible to issue a replicated NFT by copying gene data recorded in an NFT of a Kitty of CryptoKitties4, which is famous as an NFT game. Also, as for an off-chain NFT, it is possible to issue a replicated NFT by copying a Tweet or an identifier (URL) of an image recorded in the NFT. In the example in FIG. 4, T1 (a Tweet of an identifier w1 (URL)), which is the NFT associated data D3 issued by the SC 1 (202) of the BC 1 (Ethereum) 201, can be replicated by the SC 1 (202) of another BC 2 (HLF).

Since "uniqueness" is a major feature of NFTs, a mechanism for preventing issuance of a replicated NFT is required in the NFT industry, and, as an existing method, there is the above-mentioned "HEXA" method that is nPF capable of NFT conversion of Tweets, for example. By HEXA, the issued NFT-related information (corresponding to NFT metadata) is recorded in a database (DB) of HEXA, and an NFT in which an HEXA NFT card (corresponding to a certificate) indicating a link or the like to the NFT-related information is recorded is issued. By this HEXA, it is possible to distinguish afterward whether the NFT after issuance is a replicated NFT.

By an existing method such as HEXA, however, it is not possible to directly prevent issuance of a replicated NFT, and it is difficult to secure NFT uniqueness in advance. By an existing method, a certificate is added as NFT metadata, so that, even if a replicated NFT is issued, it is possible to determine afterward whether the NFT is authentic by referring to the information in the certificate of the replicated NFT. As it is possible to determine whether the NFT is authentic even if a replicated NFT is issued, it is considered that an incentive for a malicious person to issue a replicated NFT is reduced, and replicated NFT issuance can be indirectly reduced. However, it is not possible to directly prevent issuance of a replicated NFT, and it is difficult to ensure NFT uniqueness in advance.

On the other hand, the NFT uniqueness ensuring device 100 of the embodiment (Example 1) stores the existing NFT associated data Dx, which is the already issued NFTs, in the DB 103, as illustrated in FIG. 1. The NFT uniqueness ensuring device 100 then performs duplication determination between the NFT associated data D3 before issuance and the existing NFT associated data Dx in the DB 103, and permits issuance of an NFT having the NFT associated data D3 only in a case where there is no duplication. In this manner, the NFT uniqueness ensuring device 100 performs duplication determination on the existing NFT associated data before an NFT is issued. Thus, it is possible to prevent issuance of a replicated NFT in advance, and ensure uniqueness of the NFT at the time of issuance.

### (Example 2 of an NFT Uniqueness Ensuring Method According to an Embodiment)

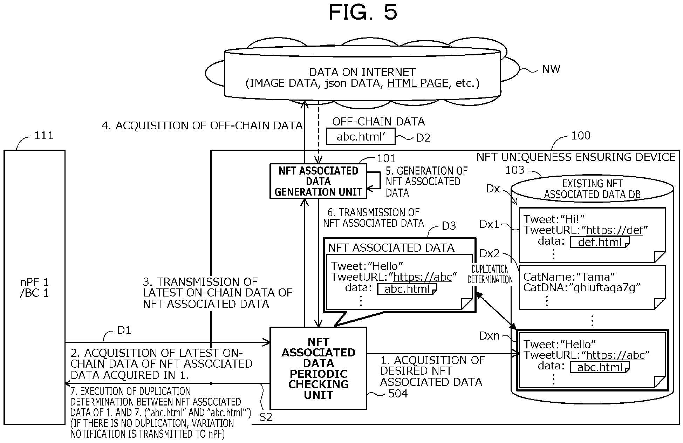

FIG. 5 is a schematic explanatory diagram of Example 2 of an NFT uniqueness ensuring method according to an embodiment. An NFT uniqueness ensuring device 100 illustrated in FIG. 5 includes an NFT associated data periodic checking unit 504, in addition to an NFT associated data generation unit 101 and a DB 103 similar to those in FIG. 1. The NFT associated data generation unit 101 and the NFT associated data periodic checking unit 504 function as the control unit of the NFT uniqueness ensuring device 100. Note that the NFT uniqueness ensuring device 100 has both the configuration in FIG. 1 and the configuration in FIG. 5.

Regarding each piece of the NFT associated data (on-chain data and off-chain data), the NFT uniqueness ensuring device 100 of Example 2 acquires the latest NFT associated data at appropriate timing, and performs comparison, to detect variation in the NFT associated data over the lapse of time or the like.

The NFT uniqueness ensuring device 100 of Example 2 performs the following processes 1. to 8., to ensure uniqueness of the NFT to be issued.
1. The NFT associated data periodic checking unit 504 periodically acquires desired NFT associated data Dx (Dxn, for example) from the DB 103. For example, the NFT associated data periodic checking unit 504 acquires different NFT associated data Dx, for example, at each different time (for each time result), as to all the NFT associated data Dx recorded in the DB 103.
2. The NFT associated data periodic checking unit 504 acquires, from the nPF 1 (111), the latest on-chain data D1 (a Tweet accompanied by an URL, for example) of the NFT associated data Dxn acquired in 1.
3. The NFT associated data periodic checking unit 504 transmits the latest on-chain data D1 of the NFT associated data Dx to the NFT associated data generation unit 101.
4. When the on-chain data D1 includes an URI, the NFT associated data generation unit 101 acquires off-chain data D2 from a network NW.
5. The NFT associated data generation unit 101 generates NFT associated data D3 by associating (linking) the on-chain data D1 with the off-chain data D2 acquired from NW.
6. The NFT associated data generation unit 101 transmits the NFT associated data D3 to the NFT associated data periodic checking unit 504.
7. The NFT associated data periodic checking unit 504 performs a duplication determination process. The NFT associated data periodic checking unit 504 determines presence or absence of duplication between the data content of the existing NFT associated data Dxn acquired from the DB 103 in the process in 1. and the data content of the NFT associated data D3 associated in the process in 7.

In the example illustrated in FIG. 5, the NFT associated data periodic checking unit 504 performs data duplication determination between "abc.html" in the off-chain data of the existing NFT associated data Dxn in the DB 103 and "abc.html'" in the off-chain data D2 acquired from NW. The NFT associated data periodic checking unit 504 transmits a duplication determination result (variation notification) S2 to the nPF 1 (111) . When the off-chain data "abc.html" and the off-chain data "abc.html'" are different in data content, the NFT associated data periodic checking unit 504 determines that there is no duplication, and transmits a variation notification S2 indicating that there is no duplication to the nPF 1 (111). When the off-chain data "abc.html" and the off-chain data "abc.html'" are the same in data content, on the other hand, the NFT associated data periodic checking unit 504 determines that there is duplication. In this case, the NFT associated data periodic checking unit 504 may transmit a variation notification S2 indicating the presence of duplication to the nPF 1 (111).

As described above, the NFT uniqueness ensuring device 100 of Example 2 can periodically perform duplication determination on the existing NFT associated data Dx recorded in its DB 103, and transmits a variation notification S2 to the nPF 1 (111) each time. Based on the periodic variation notification S2 from the NFT uniqueness ensuring device 100, the nPF 1 (111) can determine presence or absence of duplication, from the presence or absence of a change in the data content of the existing NFT associated data Dx due to the lapse of time or the like. Thus, the nPF 1 (111) can ensure uniqueness of the NFT every time a new NFT is issued. The NFT uniqueness ensuring device 100 can perform the periodic NFT duplication determination described in Example 2, in addition to the duplication determination process at the time of NFT issuance as described in Example 1.

### (Variation in Off-Chain Data over Time)

There are cases where off-chain data includes a noise portion for an NFT that dynamically changes depending on the acquisition timing. Even in a case where it is to be determined that there is duplication, it is determined that there is no duplication due to the noise. This noise is particularly large in HTML pages, and corresponds to the portions of data written in HTML, such as current news and advertisements that are updated in real time, for example.

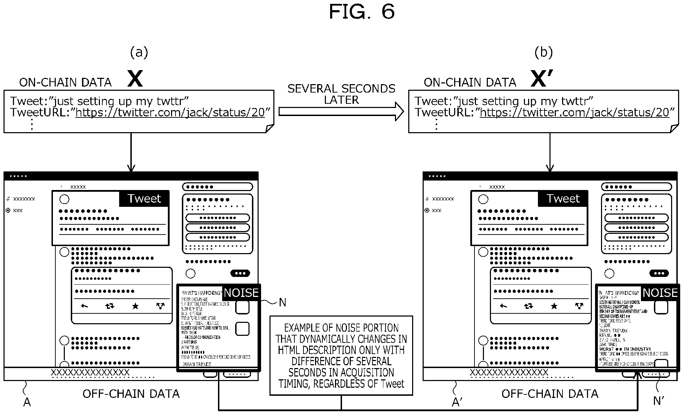

FIG. 6 is an explanatory diagram in which the content of off-chain data changes in noise. FIG. 6 illustrates an example of noise when the off-chain data is an HTML page of a Tweet. It is assumed that on-chain data X and off-chain data A (which is an example of a browser screen in FIG. 6, but is data written in HTML in practice) illustrated in FIG. 6(a) are stored as the existing NFT associated data Dx in the DB 103.

Noise N in this case is the portion in a thick frame (current news, for example) in FIG. 6(a) . Being updated in real time, the current news frequently changes with the lapse of time, and the content might change in several seconds.

Here, as illustrated in FIG. 6(b), it is assumed that an attempt is made to issue a replicated NFT in which X' in the drawing is on-chain data (data content including the URL of the Tweet is the same as that of the on-chain data X). In this case, when off-chain data A' of FIG. 6(b) is acquired, the description in HTML might dynamically change (the current news of noise N might change to different noise N') at an acquisition timing in FIG. 6(b), which is different from that in FIG. 6(a) by several seconds. In this case, the off-chain data A of FIG. 6(a) is different from the off-chain data A' in FIG. 6(b) . In this case, in the configuration with only the duplication determination unit 102 illustrated in Example 1 (FIG. 1), it is determined that there is no duplication, and a replicated NFT can be issued. This aspect is countered by variation detection by the NFT associated data periodic checking unit 504 illustrated in Example 2 (FIG. 5).

### (Example of the Hardware Configuration of an NFT Uniqueness Ensuring Device)

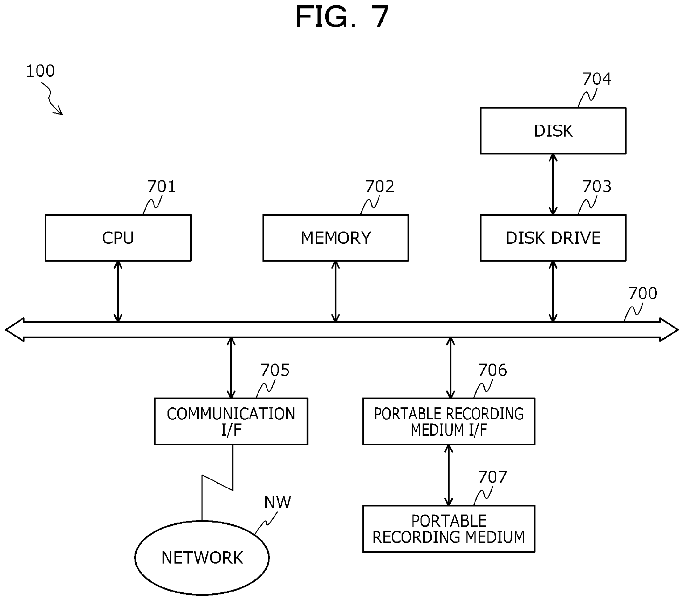

FIG. 7 is a diagram illustrating an example of the hardware configuration of an NFT uniqueness ensuring device. An NFT uniqueness ensuring device 100 may be formed with a computer having general-purpose hardware illustrated in FIG. 7. Also, the NFT uniqueness ensuring device 100 may be formed with a cloud such as a server group in the network NW.

The NFT uniqueness ensuring device 100 includes a central processing unit (CPU) 701, a memory 702, a disk drive 703, and a disk 704. Also, the NFT uniqueness ensuring device 100 includes a communication interface (I/F) 705, a portable recording medium I/F 706, and a portable recording medium 707. Further, the respective components are coupled to each other by a bus 700.

Here, the CPU 701 functions as a control unit that controls the entire NFT uniqueness ensuring device 100. The CPU 701 may include a plurality of cores. The memory 702 includes a read only memory (ROM), a random access memory (RAM), a flash ROM, and the like, for example. Specifically, for example, the flash ROM stores an OS program, the ROM stores application programs, and the RAM is used as a work area for the CPU 701. The programs stored in the memory 702 are loaded into the CPU 701, to cause the CPU 701 to execute coded processing.

The disk drive 703 controls reading/writing of data from/into the disk 704, under the control of the CPU 701. The disk 704 stores data that is written under the control of the disk drive 703. As the disk 704, a magnetic disk, an optical disk, or the like is adopted, for example.

The communication I/F 705 is connected to the network NW through a communication line, and is connected to an external computer through the network NW. The external computer may be another BC 201, for example. The communication I/F 705 then manages the interface between the network NW and the inside of the device, and controls inputs/outputs of data from the external computer. As the communication I/F 705, a modem, a LAN adapter, or the like may be adopted, for example.

The portable recording medium I/F 706 controls reading/writing of data from/into the portable recording medium 707, under the control of the CPU 701. The portable recording medium 707 stores data that is written under the control of the portable recording medium I/F 706. As the portable recording medium 707, a compact disc (CD)-ROM, a digital versatile disk (DVD), a universal serial bus (USB) memory, or the like is adopted, for example.

The CPU 701 illustrated in FIG. 7 conducts the processes to be performed by the NFT associated data generation unit 101, the duplication determination unit 102, and the NFT associated data periodic checking unit 504 illustrated in FIGS. 1 and 5, for example. The memory 702, the disk 704, and the portable recording medium 707 illustrated in FIG. 7 record and hold information (NFT associated data Dx) and the like in the DB 103 illustrated in FIGS. 1 and 5, for example.

### (Example of a Process According to the Embodiment)

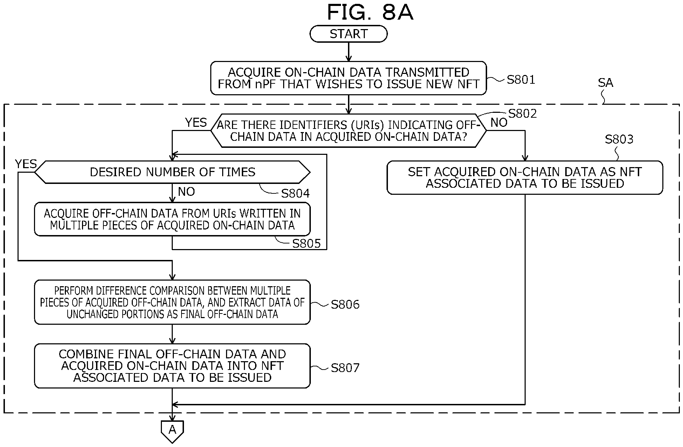

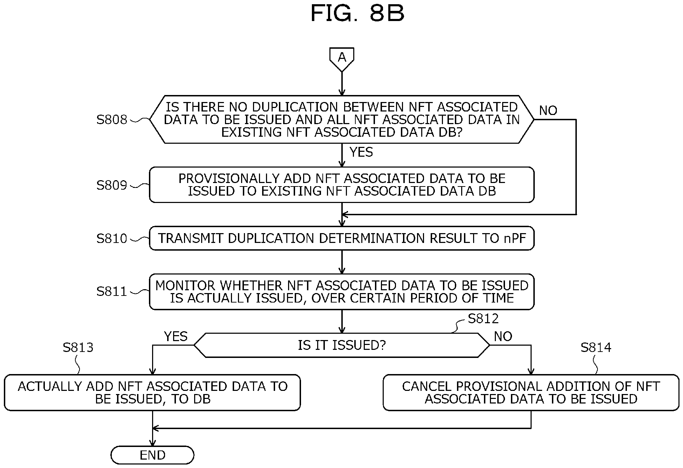

FIGS. 8A and 8B are flowcharts illustrating an example of a process according to Example 1 of an NFT uniqueness ensuring device. FIGS. 8A and 8B illustrate an example of a process compatible with Example 1 to be performed by the control unit (CPU 701) of the NFT uniqueness ensuring device 100. Note that a process SA (steps S802 to S807) surrounded by a dot-and-dash line is a process that is performed in a similar manner in Example 2.

As illustrated in FIG. 8A, the CPU 701 of the NFT uniqueness ensuring device 100 of Example 1 first acquires the on-chain data D1 transmitted from the nPF 111 that wishes to issue a new NFT (step S801). Next, the CPU 701 determines whether there are identifiers (URIs, for example) indicating off-chain data D2 in the acquired on-chain data D1 (step S802).

If the determination result indicates that there are no identifiers, which means that there is no off-chain data D2 (step S802: No), the CPU 701 sets the on-chain data D1 acquired first as the NFT associated data D3 to be issued without any change (step S803). On the other hand, if the determination result indicates that there are identifiers (step S802: Yes), the CPU 701 acquires a plurality of pieces of off-chain data D2 at different timing for each identifier. For example, the CPU 701 determines whether the acquired off-chain data D2 has reached a desired number of times (step S804). If the number of times has not reached the desired number (step S804: No), the CPU 701 acquires the off-chain data D2 from the URIs written in the plurality of acquired on-chain data D1 (step S805) until the number of times reaches the desired number (step S804: Yes).

Next, the CPU 701 compares the plurality of pieces of acquired off-chain data D2 in terms of difference, and extracts the data of the unchanged portions as final off-chain data D2 (step S806). Next, the CPU 701 combines the final off-chain data D2 and the acquired on-chain data D1 into the NFT associated data D3 to be issued (step S807) .

After the execution of step S803 or step S807, the CPU 701 performs duplication determination between the NFT associated data D3 to be issued and all the NFT associated data Dx in the DB 103 (step S808), as illustrated in FIG. 8B. The processing method for the duplication determination may be any of various methods such as perfect coincidence determination and determination by AI, for example. If the duplication determination result indicates that there is no duplication (step S808: Yes), the NFT associated data D3 to be issued is provisionally added as existing NFT associated data Dx to the DB 103 (step S809). Further, the CPU 701 sends (transmits) a duplication determination result notification (no duplication) to the nPF 111 (step S810), and monitors whether the NFT to be issued is actually issued over a certain period of time (step S811).

On the other hand, if the duplication determination result in step S808 indicates that there is duplication (step S808: No), the CPU 701 moves on to the process in step S810.

In step S812, if it is confirmed that the NFT to be issued is actually issued (step S812: Yes), the CPU 701 actually adds the NFT associated data D3 to be issued, to the DB 103 (step S813). On the other hand, if the NFT to be issued is not actually issued (step S812: No), the CPU 701 cancels the provisional addition of the NFT associated data D3 to be issued, to the DB 103 (step S814). By performing the process in step S813 or step S814, the CPU 701 ends the process according to Example 1 described above.

In the above process, to prevent false reservation of the NFT associated data D3 to be issued, actual addition is performed after provisional addition. Thus, the NFT uniqueness ensuring device 100 can prevent another nPF 111 from issuing an NFT.

### (Specific Example of Extraction of Unchanged Portions by Difference Comparison of Off-Chain Data)

In the above process, the NFT uniqueness ensuring device 100 performs difference comparison of a plurality of pieces of off-chain data D2 acquired in units of characters a plurality of times (N times) at different timings, deletes the differences, and extracts the unchanged portions. This process is now described through a specific example.

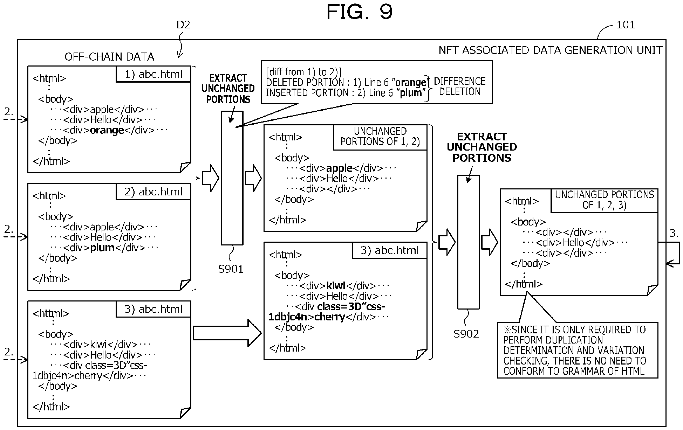

FIG. 9 is an explanatory diagram of a specific example of extraction of unchanged portions by difference comparison of off-chain data. The NFT associated data generation unit 101 (CPU 701) extracts unchanged portions by difference comparison of the off-chain data D2. The CPU 701 performs the process "2. acquisition of off-chain data" of Example 1 illustrated in FIG. 1 N times, which is set as appropriate, and extracts unchanged portions before performing the process "3. generation of NFT associated data". FIG. 9 illustrates an example in which the off-chain data D2 is in HTML, and N = 3.

Since N = 3, the CPU 701 acquires the off-chain data D2 three times at different timings. Difference comparison between the initial two pieces of the off-chain data D2 is performed in units of characters, a difference (deletion/insertion) is deleted, and an unchanged portion is extracted (step S901). In the example in FIG. 9, the CPU 701 selects the initial two pieces, "1) abc.html" and "2) abc.html", of the off-chain data D2, determines that "orange" and "plum" are differences, and deletes the differences "orange" and "plum", to leave the unchanged portions.

After that, the CPU 701 performs, in a similar manner, difference comparison in units of characters between the extracted unchanged portions and the off-chain data D2 that has not yet been subjected to difference comparison, and extracts the unchanged portions (step S902). In the example in FIG. 9, difference comparison is performed between the unchanged portions of the initial two pieces "1) abc.html" and "2) abc.html" of the off-chain data D2, and the third piece "3) abc.html" of the off-chain data D2. The CPU 701 then deletes "kiwi", "class = 3D ... jc4n", and "cherry", which are the differences, and extracts the unchanged portions.

In the above example in the case where N = 3, the CPU 701 completes the extraction of the unchanged portions at this point. Note that, since it is only required to perform duplication determination and variation checking as to the NFT associated data D3, the CPU 701 does not need to check whether the unchanged portions conform to any grammar (the grammar of HTML, for example). The NFT uniqueness ensuring device 100 then performs the process described above, to cope with HTML or the like in which the off-chain data changes with the lapse of time. The NFT uniqueness ensuring device 100 then accurately performs duplication determination using the extracted unchanged portions of the off-chain data.

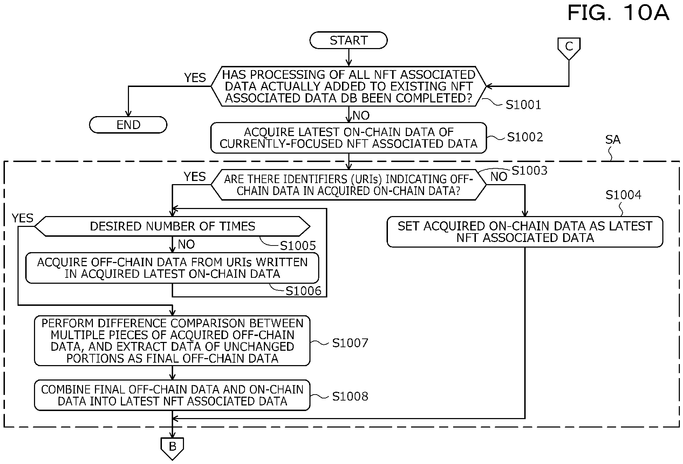

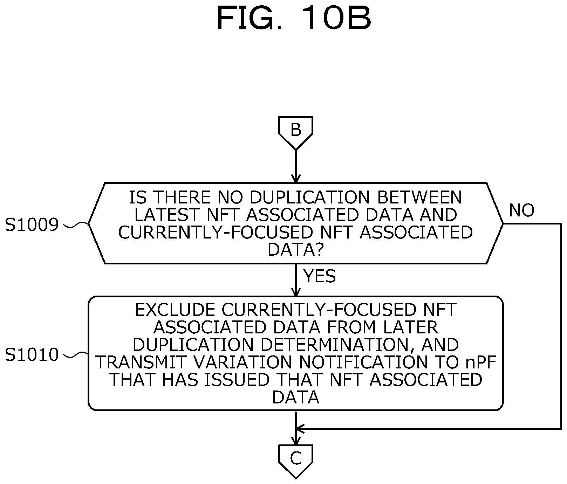

FIGS. 10A and 10B are flowcharts illustrating an example of a process according to Example 2 of an NFT uniqueness ensuring device. FIGS. 10A and 10B illustrate an example of a process compatible with Example 2 to be performed by the control unit (CPU 701) of the NFT uniqueness ensuring device 100. Note that a process SA (steps S1003 to S1008) surrounded by a dot-and-dash line is a process similar to the process SA (steps S802 to S807) described in Example 1.

As illustrated in FIG. 10A, the CPU 701 of the NFT uniqueness ensuring device 100 of Example 2 first focuses periodically on each piece of all the NFT associated data Dx actually added to the DB 103 at appropriate timing (step S1001). In step S1001, the CPU 701 repeatedly performs the processes in and after step S1002 on all the NFT associated data Dx (step S1001: No), and ends the above processes when having performed the processes on all the NFT associated data Dx (step S1001: Yes).

In step S1002, the CPU 701 acquires the latest on-chain data D1 of the currently-focused NFT associated data Dx, by executing the SC 202 that has issued the NFT having this NFT associated data Dx or the like (step S1002). Next, the CPU 701 determines whether there are identifiers (URIs, for example) indicating off-chain data D2 in the acquired on-chain data D1 (step S1003).

If the determination result indicates that there are no identifiers, which means that there is no off-chain data D2 (step S1003: No), the CPU 701 sets the acquired on-chain data D1 as the latest NFT associated data D3 without any change (step S1004). On the other hand, if the determination result indicates that there are identifiers (step S1003: Yes), the CPU 701 acquires a plurality of pieces of off-chain data D2 at different timing for each identifier. For example, the CPU 701 determines whether the acquired off-chain data D2 has reached a desired number of times (step S1005). If the number of times has not reached the desired number (step S1005: No), the CPU 701 acquires the off-chain data D2 from the URIs written in the plurality of acquired on-chain data D1 (step S1006) until the number of times reaches the desired number (step S1005: Yes).

Next, the CPU 701 compares the plurality of pieces of acquired off-chain data D2 in terms of difference, and extracts the data of the unchanged portions as final off-chain data D2 (step S1007) . Next, the CPU 701 combines the final off-chain data D2 and the acquired on-chain data D1 into the latest NFT associated data D3 (step S1008).

After the execution of step S1004 or step S1008, the CPU 701 performs duplication determination between the latest NFT associated data D3 and the currently-focused NFT associated data Dx (step S1009), as illustrated in FIG. 10B. If the duplication determination result indicates that there is no duplication (corresponding to a case where the NFT associated data D3 has changed since the time of issuance of the NFT) (step S1009: Yes), the CPU 701 does not include the currently-focused NFT associated data Dx in the duplication determination thereafter. The CPU 701 then sends (transmits) a variation notification to the nPF 111 that has issued the currently-focused NFT associated data Dx (step S1010). After that, the CPU 701 returns to the process in step S1001. Also, if the duplication determination result in step S1009 indicates that there is duplication (step S1009: No), the CPU 701 returns to the process in step S1001.

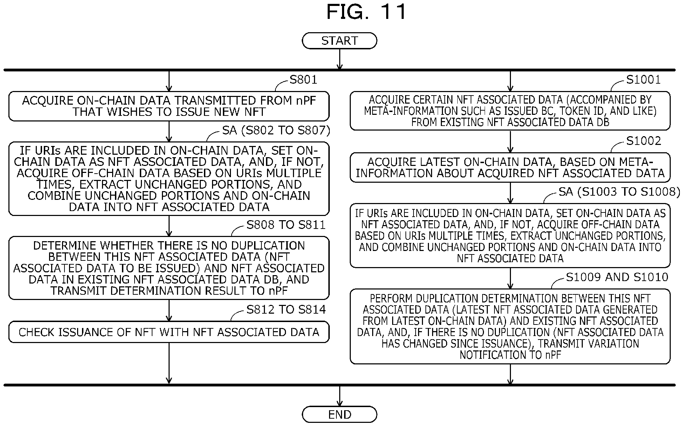

FIG. 11 is a flowchart illustrating an example of a process in which the processes according to Examples 1 and 2 of the NFT uniqueness ensuring device are integrated. FIG. 11 illustrates an example of a process in which the processes according to Example 1 (left side in the drawing) and Example 2 (right side in the drawing) to be performed by the control unit (CPU 701) of the NFT uniqueness ensuring device 100 are integrated.

As described above, the process SA (steps S802 to S807) surrounded by the dot-and-dash line in Example 1, and the process SA (steps S1003 to S1008) surrounded by the dot-and-dash line in Example 2 are similar to each other. The CPU 701 may perform the processes SA of Examples 1 and 2 in a common process.

The CPU 701 asynchronously performs the process according to Example 1 (left side in the drawing) and the process according to Example 2 (right side in the drawing) illustrated in FIG. 11. The CPU 701 starts the process according to Example 1 at the timing of acquisition of the on-chain data D1 transmitted by a certain nPF 111 that wishes to issue a new NFT. On the other hand, the CPU 701 starts a process at appropriate timing as the process according to Example 2.

Each process in FIG. 11 is assigned a step number (steps S801 to S814, and steps S1001 to S1010) corresponding to the respective Examples 1 and 2.

According to the embodiment described above, it is possible to prevent issuance of a replicated NFT in advance by performing duplication determination between the NFT to be issued and the existing NFT associated data prior to NFT issuance. In addition to the above, by periodically checking variation in the NFT associated data, it is possible to cope with variation in the NFT associated data, and ensure safe NFT uniqueness.

Also, off-chain data is acquired a plurality of times at different timings, and difference comparison between the acquired off-chain data is performed to extract unchanged portions, so that noise data in the off-chain data that dynamically change with acquisition timing can be eliminated. Thus, it is possible to accurately perform the duplication determination only between the NFT associated data, and variation checking on the NFT associated data, and further, NFT uniqueness can be effectively ensured.

### (Specific Examples of Processes According to Examples 1 and 2)

Next, specific examples of the processes according to Examples 1 and 2 are described. More specific examples of processes are described regarding Examples 1 and 2 of the NFT uniqueness ensuring device 100 described above.

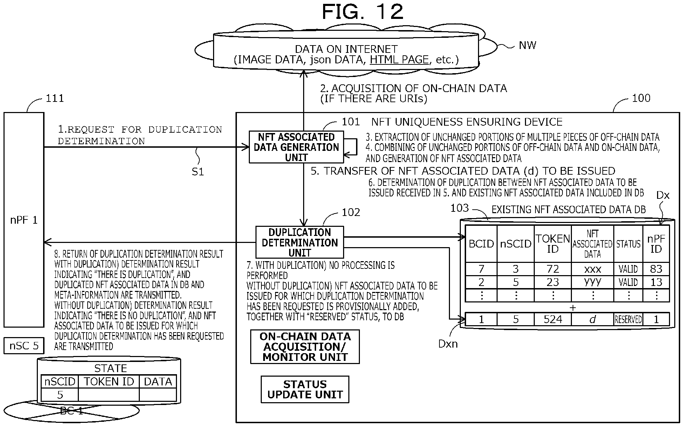

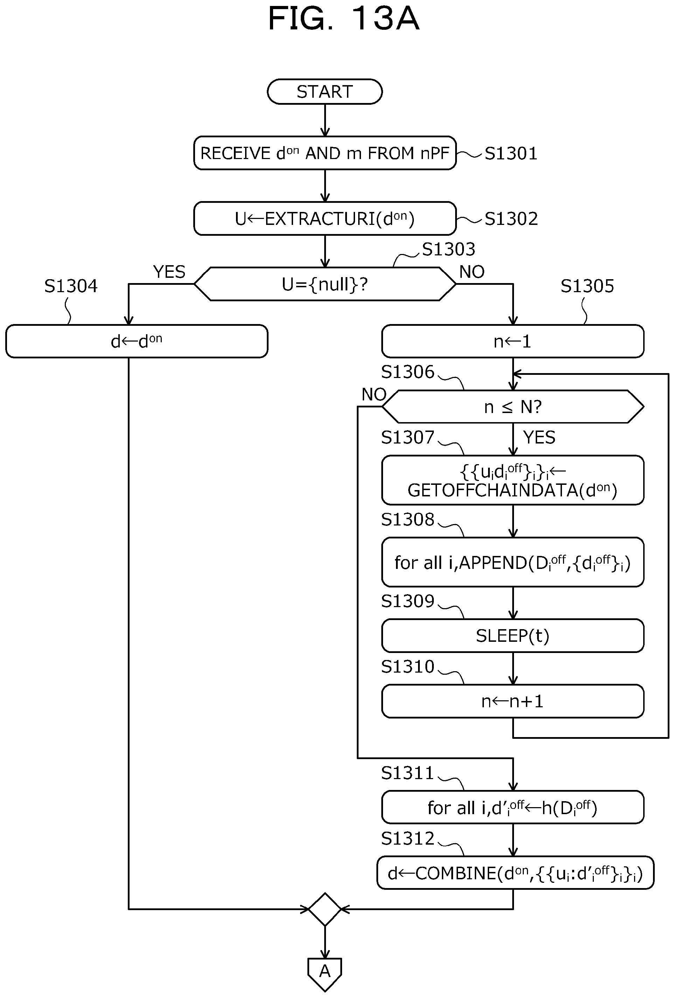

FIG. 12 is a configuration diagram for explaining a specific process according to Example 1 of the NFT uniqueness ensuring device. FIGS. 13A to 13C are flowcharts of the specific example of the process according to Example 1 of the NFT uniqueness ensuring device. In FIG. 12, the same components and the same processes as those in the NFT uniqueness ensuring device 100 of Example 1 illustrated in FIG. 1 and others are denoted by the same reference numerals as those in FIG. 1 and others.

Here, the definitions of terms, variables, constants, and functions that are used in the processes according to Examples 1 and 2 are explained. Also, variables a, b, A, B, and the like that are not defined in the following description are temporary variables that are valid only in functions.

As for the terms, nPF represents NFT issuance platforms (n PFs). Also, nSC represents smart contracts (n SCs) that issue NFTs to be used by the nPF and acquires their on-chain data. BC represents a blockchain.

Variables and constants are described below.
d^{on}: on-chain data (in json format, for example) to be issued by the nPF
m: d meta-information ({p_{nSC}, p_{BC}, p_{nSC}, p_{T}, Pn_{PF}})
p_{BC}: the ID of the BC being used by the nPF (issued in advance by the NFT uniqueness ensuring device 100) p_{nSC} is the ID (address or the like) of the smart contract being used by the nPF to issue an NFT in a BC.
p_{T}: the ID of an NFT in the nSC
p_{nPF}: the ID of the nPF (issued in advance by the NFT uniqueness ensuring device 100)
d: the NFT associated data to be issued
uᵢ: the URIs included in the on-chain data D1
dᵢ^{off}: the off-chain data present in NW, such as the Internet, identified by uᵢ
Dᵢ^{off}: the set of NFT associated data based on dᵢ acquired at different timings (an empty set {null} in the initial state)
N: the number of times dᵢ is acquired (an appropriate positive integer)
J: the set of NFT associated data having {null} as the initial state
D*: the set ({{d*₁, m'*₁}, {d*₂, m'*₂}, ..., {d*_{L}, m'*_{L}}}) storing already issued NFT associated data ({d*₁, d*₂, ..., d*_{L}}) Dx and m'* corresponding to the respective pieces of the already issued NFT associated data
m': meta-information (m' = {m, s}) in which "status s (the initial status is "reserved")" assigned by the NFT uniqueness ensuring device 100 is added to m When s does not change from the initial status "reserved" to "valid" even after a certain period of time elapses, it is set as "s ← "invalid"". L represents the original number (D*) of D*.
r: a determination result of duplication determination (false: without duplication, true: with duplication)
d^{on_c}: the latest on-chain data identified from meta-information about certain existing NFT associated data Dx

### Functions are described below.

EXTRACTURI (a): a function that returns a set based on a URI included in a. If there are no URIs, an empty set ({null}) is returned.
GETOFFCHAINDATA(a): a function (the operator of the NFT uniqueness ensuring device 100 performs coding in advance in cooperation with the nPF operator or the like, for example) that extracts URIuᵢ included in a, acquires di^{off} for each uᵢ, and returns dᵢ^{off} as a set serving as a source of json format data (expressed as {ui:di}) having dᵢ^{off} as the attribute value
APPEND(A, b): a function of adding b as a source of a set A
SLEEP: a function to stop processing for t seconds (t being any appropriate number)
h(A): a function of performing difference comparison using the original data of the set A (= {a₁, a₂, ...}) as text, and generating and returning the data of the unchanged portions of the text
EXTRACTLEAFNODES(A, B): a function of adding all leaf nodes (attribute values of terminals in json format data) of json format data (object) b to A based on values converted into a character string (when the terminal leaf nodes form a sequence, each element in the sequence is regarded as a terminal leaf node)
GETVALUE(a): a function that returns an attribute value of a
GETELEMENTS(a): a function that returns a set based on the elements of an n-dimensional sequence a
COMBINE(a, B): a function that returns json format data ({a, {u₁:b₁}, {u₂:b₂}, ..., {u_{|B|}:b_{|B|}}) obtained by adding the element of B to the json format data a
f(a, b): a function that defines Z and W as sets based on values obtained by converting all leaf nodes (attribute values of terminals in the json format data) of the json format data a and b into character strings (when the terminal leaf nodes form a sequence, each element in the sequence is regarded as a terminal leaf node), and returns "true" when Z = W, and "false" when Z ≠ W
g(a, b): a function that performs difference comparison between the character strings a and b in units of characters, and returns character strings from which difference portions (deleted portions and inserted portions) have been deleted. Various algorithms and libraries for difference comparison and extraction in units of characters are disclosed, and these algorithms, libraries, and the like are also used in the function g.
MINT (A): a function that issues an NFT of a token IDp_{T} having d^{on} (∈ d ∈ A) when the nPF 111 executes the nSC 202 on the BC 201 indicated by each of p_{BC} and p_{nSC} (∈ m ∈ m' ∈ A)
FORMATONCHAINDATA(a, b): a function that shapes a into json format data in a format for nRF identified by b, and returns the shaped data (if a = null, it returns null). FORMATONCHAINDATA(a, b) is implemented so as to have the same format as d^{on}, for example, by the nPF operator in cooperation with the operator of the NFT uniqueness ensuring device 100.
UPDATESTATE(a, b): a function that issues Tx to update the state (ledger) of p_{BC}, using a as a token ID and b as data.
MONITOR(a, b): a function that monitors the on-chain data d~ of the NFTs identified by p_{BC}, p_{nSC}, and p_{T} of the meta-information a over a certain period of time. If nothing is detected over a certain period of time, d~ ← null. When s does not change from the initial status "reserved" to "valid" even after a certain period of time elapses, it is set as "s ← "invalid"".
UPDATEDB(a, b): a function that identifies a source m'* of D* in the meta-information a, and executes "s ← b" on the source element s

A specific example of the process from an NFT duplication request to a notification of a duplication determination result is now described with reference to FIGS. 12 and 13A. The NFT associated data generation unit 101 of the NFT uniqueness ensuring device 100 receives 1. request for duplication determination illustrated in FIG. 12, from the nPF 1 (111). At this point of time, the NFT associated data generation unit 101 receives on-chain data d^{on} and its meta-information m (nSCID, token information ID, and the like) from the nPF that wishes to newly issue an NFT (step S1301), as illustrated in FIG. 13A.

Next, the NFT associated data generation unit 101 performs a different process, depending on 2. whether identifiers such as URIs are included in the on-chain data. In a case where there are URIs in the on-chain data, the NFT associated data generation unit 101 acquires off-chain data that can be acquired with the URIs included in the on-chain data received in 1., from NW a plurality of times at different timings. On the other hand, in a case where there are no URIs in the on-chain data, the NFT associated data generation unit 101 sets the on-chain data as the NFT associated data to be issued.

At this point of time, the NFT associated data generation unit 101 executes EXTRACTURI(d^{on}), and sets the return value as U (step S1302). The NFT associated data generation unit 101 then determines whether U is an empty set ({null}) (step S1303). In a case where U is an empty set (step S1303: Yes), which is a case where identifiers such as URIs are not included in the on-chain data, the NFT associated data generation unit 101 sets d^{on} as the NFT associated data d to be issued (step S1304). On the other hand, if U is not an empty set (step S1303: No), on the other hand, the NFT associated data generation unit 101 performs a process of extracting unchanged portions of the off-chain data acquired N times at different timings (steps S1306 to S1310).

Specifically, the NFT associated data generation unit 101 sets 1 to the variable n (step S1305). The NFT associated data generation unit 101 then determines whether n ≤ N (step S1306). If n ≤ N (step S1306: Yes), the NFT associated data generation unit 101 repeats the processes in steps S1307 to S1310. If n ≤ N is not satisfied (step S1306: No), the NFT associated data generation unit 101 moves on to the process in step S1311.

In step S1307, the NFT associated data generation unit 101 performs processing of GETOFFCHAINDATA(d^{on}) (step S1307). The NFT associated data generation unit 101 then adds the off-chain data di^{off} for each uᵢ to Dᵢ^{off} based on APPEND (Dᵢ^{off}, {dᵢ^{off}}ᵢ), every time the process in step S1307 is performed (step S1308).

Also, the NFT associated data generation unit 101 acquires off-chain data at different timings, by executing SLEEP(t) between processes each time (step S1309). Next, the NFT associated data generation unit 101 increments the variable n (step S1310), and returns to step S1306. If the range of the determination condition n ≤ N is exceeded in step S1306 (step S1306: No), the NFT associated data generation unit 101 moves on to the process in step S1311.

In step S1311, the NFT associated data generation unit 101 performs 3. extraction of unchanged portions of a plurality of pieces of off-chain data, and 4. combining of the unchanged portions of the off-chain data and the on-chain data, to generate NFT associated data. After that, the NFT associated data generation unit 101 performs 5. transfer of the NFT associated data d to be issued, to the duplication determination unit 102.

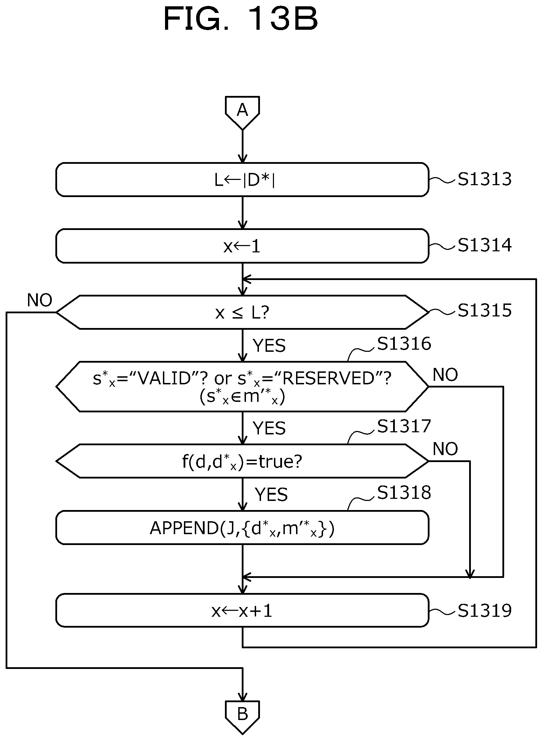

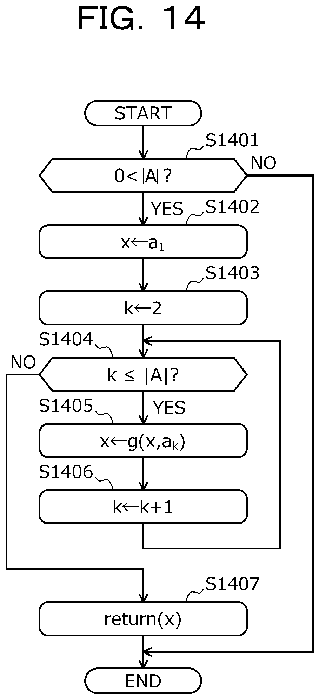

At this point of time, the NFT associated data generation unit 101 extracts the unchanged portions with h(Dᵢ^{off}), and sets the final off-chain data with the return value d'ᵢ^{off} (step S1311). The NFT associated data generation unit 101 then sets the return value obtained by executing COMBINE (d^{on}, {{uᵢ:d'ᵢ^{off}}ᵢ}ᵢ) as d (step S1312). Details of the processing of the function h will be described later with reference to FIG. 14. After the process in step S1304 or step S1312, the NFT associated data generation unit 101 moves on to the process in step S1313 (FIG. 13B).

Next, the duplication determination unit 102 of the NFT uniqueness ensuring device 100 performs 6. duplication determination between the NFT associated data d to be issued received from the NFT associated data generation unit 101 and the existing NFT associated data Dx stored in the DB 103. Here, the duplication determination unit 102 performs duplication determination on the records whose statuses are "valid" and "reserved" among the NFT associated data Dx in the DB 103 illustrated in FIG. 12.

As illustrated in FIG. 12, in the DB 103, the existing NFT associated data Dx has the respective items of BCID, nSCID, token ID, NFT associated data (name), status, and nPFID in each record. A plurality of pieces of NFT associated data Dx is recorded in units of records in the DB 103.

The duplication determination unit 102 then performs 7. duplication determination process. Then, the duplication determination unit 102 does not perform any special processing on the NFT associated data to be issued when it is determined that there is duplication. However, when it is determined that there is no duplication, the NFT associated data to be issued for which the duplication determination request has been made is added, with a "reserved" status, to the DB 103. In the example in FIG. 12, a record in which the BCID is "1", the nSCID is "5", the token ID is "524", the NFT associated data is "d", the status is "reserved", and the nPFID is "1" is added to the DB 103 as the NFT associated data Dxn to be provisionally registered and issued.

Further, the duplication determination unit 102 performs 8. return of a duplication determination result to the nPF 1 (111). When it is determined that there is duplication at this point of time, the duplication determination unit 102 transmits a determination result indicating that "there is duplication", and the meta-information. On the other hand, when it is determined that there is no duplication, a determination result indicating "no duplication" and the NFT associated data to be issued for which the request for duplication determination has been made are transmitted to the nPF 1 (111).

At this point of time, as illustrated in FIG. 13B, the duplication determination unit 102 sets the number of sources of the already issued NFT associated data D* as a variable L (step S1313), and sets 1 to the variable x (step S1314). The duplication determination unit 102 then repeatedly performs the duplication determination process (steps S1316 to S1319) within the range of the determination condition x ≤ L (step S1315).

In step S1316, the duplication determination unit 102 determines whether it is data d* whose statuses s* of the NFT associated data to be issued and the existing NFT associated data in the DB 103 are "valid" or "reserved" (step S1316). The duplication determination unit 102 performs duplication determination (step S1317) on the data d* whose status s* of the existing NFT associated data is "valid" or "reserved" (step S1316: Yes). The duplication determination unit 102 moves on to the process in step S1319 for the data other than the data d* whose status s* is "valid" or "reserved" among the existing NFT associated data (step S1316: No).

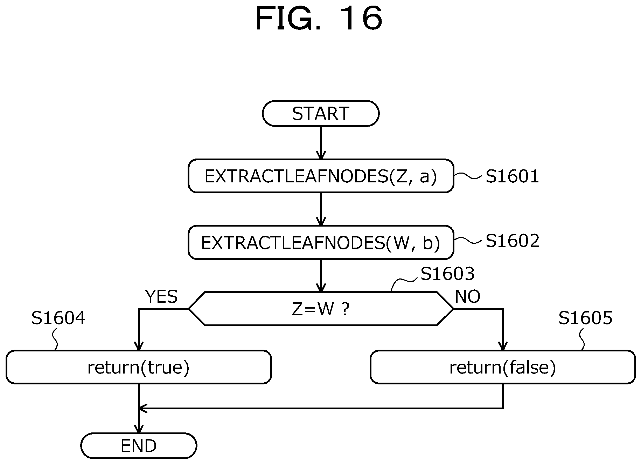

The duplication determination unit 102 then performs duplication determination on all the data d*ₓ whose s* is "valid" or "reserved" with f(d, d*ₓ) (step S1317). Details of the processing of the function f will be described later with reference to FIG. 16. If the duplication determination result indicates that there is duplicated data (step S1317: Yes), the duplication determination unit 102 adds d*x as a source of J to the DB 103 (step S1318, Dxn in FIG. 12), and moves on to the process in step S1319. On the other hand, if the duplication determination result indicates that there is no duplicated data (step S1317: No), the duplication determination unit 102 moves on to the process in step S1319. After that, the duplication determination unit 102 increments x (step S1319), and then returns to the process in step S1315.

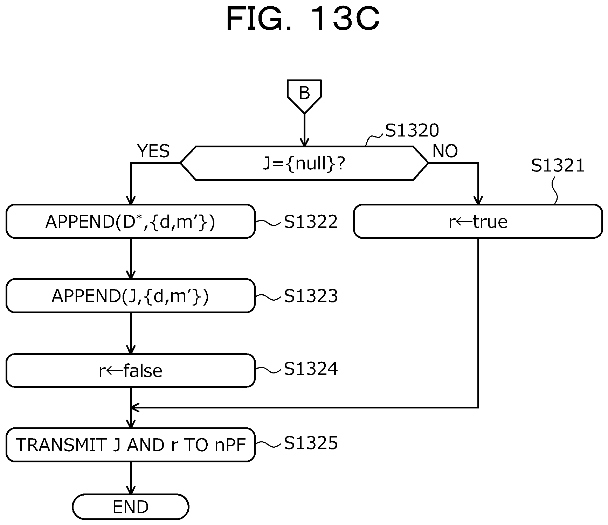

As a result of the determination in step S1315, if the determination condition x ≤ L is exceeded (step S1315: No), the duplication determination unit 102 then moves on to the process in step S1320 (FIG. 13C).

In step S1320 in FIG. 13C, the duplication determination unit 102 determines whether J is an empty set ({null}) (step S1320). If the determination result indicates that J is not an empty set (which is a case where there is duplication, step S1320: No), the duplication determination unit 102 assigns "true" to the determination result r (step S1321), and moves on to the process in step S1325. On the other hand, if the determination result indicates that J is an empty set (which is a case where there is no duplication, step S1320: Yes), the duplication determination unit 102 provisionally adds the meta-information m' having the status s added thereto and d, to D* (step S1322) . The duplication determination unit 102 then provisionally adds the meta-information m' having the status s added thereto and d, to J (step S1323), and assigns "false" to r (step S1324).

After the process in step S1321 or step S1324, the duplication determination unit 102 transmits J and r to the nPF that has requested the duplication determination (notifies the nPF of J and r) (step S1325), and ends the process.

FIG. 14 is a flowchart illustrating an example of processing of the function h in NFT associated data generation. The function h(A) indicated in step S1311 in FIG. 13A is a function with which the NFT associated data generation unit 101 performs difference comparison of the source data a of the set A as text, and generates and returns data of unchanged portions of the text. As the processing of h, the NFT associated data generation unit 101 first checks whether the source data a is included in the set A (step S1401). If the source data a is included in the set A (step S1401: Yes), the NFT associated data generation unit 101 performs the process in step S1402 and the subsequent steps, and, if the source data a is not included in the set A (step S1401: No), ends the above processes.

In step S1402, the NFT associated data generation unit 101 assigns one piece ai of the source data included in the set A to x (step S1402) . Next, the NFT associated data generation unit 101 assigns 2 to the variable k (step S1403), and performs difference comparison, using the remaining source data of A as text data (step S1404). If there are differences (step S1404: Yes), the NFT associated data generation unit 101 deletes the differences (a deleted portion and an inserted portion), and again performs assignment to x (step S1405) .

Thereafter, the NFT associated data generation unit 101 increments k (step S1406), returns to the process in step S1404, and repeats the same processes for the remaining sources of A until there are no sources in A that have not been subjected to comparison. When there are no longer sources of A that have not been subjected to comparison (step S1404: No), the NFT associated data generation unit 101 finally returns x (step S1407). The function f(a, b) defines Z and W that are sets based on values obtained by converting all leaf nodes (attribute values of terminals in the json format data) of the json format data a and b into character strings (when the terminal leaf nodes form a sequence, each element in the sequence is regarded as a terminal leaf node). The function then returns "true" when Z = W, and "false" when Z ≠ W.

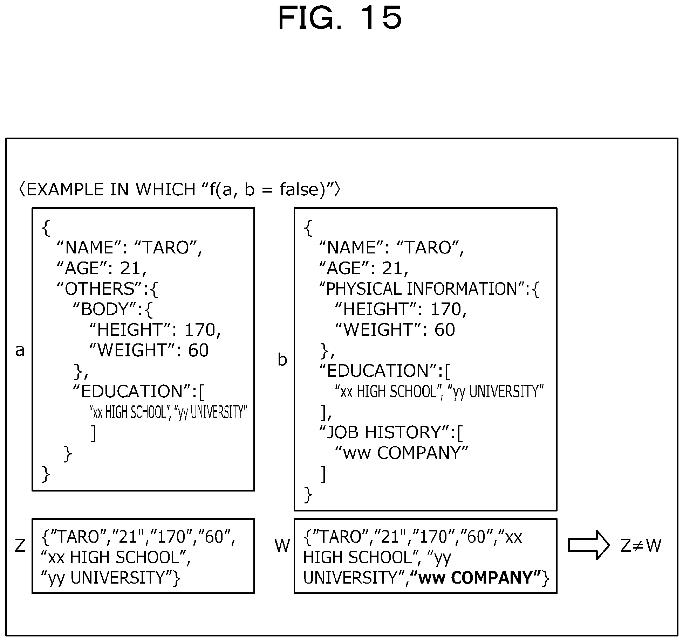

FIG. 15 is an explanatory diagram of a specific example of processing of the function f in duplication determination. For example, it is assumed that the duplication determination unit 102 has json format data (objects) a and b, and has executed f(a, b). In the processing of the function f, the duplication determination unit 102 generates sets based on the data of the terminal nodes of a and b, as Z and W, respectively. The terminal nodes of a are "Taro", "21", "170", "60", "xx High School", and "yy University", and the terminal nodes of b are "TARO", "21", "170", "60", "xx High School", "yy University", and "ww Company".

In the example illustrated in FIG. 15, "ww Company" is present only in W. Therefore, Z ≠ W, and the duplication determination unit 102 returns f(a, b) = false. Note that, since the comparison is performed based on the attribute values of the terminals, even if the hierarchy, the attribute name, and the number of dimensions of the sequence in the json format data are different, the sources other than "ww Company" might be the same between Z and W, and Z = W might be satisfied in some cases.

FIG. 16 is a flowchart illustrating an example of a process of duplication determination as to terminal nodes of json format data. The duplication determination unit 102 generates Z and W by executing an EXTRACTLEAFNODES function for the function f (steps S1601 and S1602). The duplication determination unit 102 then determines whether Z = W (step S1603). If the determination result indicates Z = W (step S1603: Yes), the duplication determination unit 102 returns "true" (step S1604). On the other hand, if Z ≠ W (step S1603: No), on the other hand, the duplication determination unit 102 returns "false" (step S1605), and ends the process.

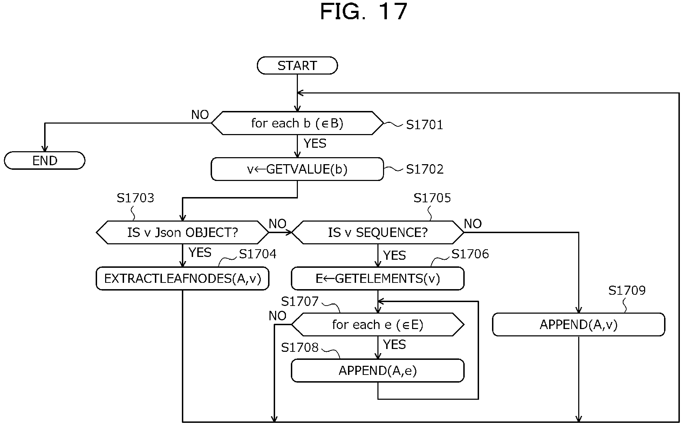

FIG. 17 is a flowchart illustrating details of the process in FIG. 16. An example of processing of the function EXTRACTLEAFNODES(A, b) (steps S1601 and S1602) in FIG. 16 is illustrated. The EXTRACTLEAFNODES(A, b) is a function of adding all leaf nodes (attribute values of terminals in json format data) of json format data (object) B to A based on values converted into a character string. Note that, in a case where the terminal leaf nodes form a sequence, each element in the sequence is regarded as a terminal leaf node.

The duplication determination unit 102 determines whether there are all json objects (b) immediately below B (step S1701), and, if there are the json objects (b) immediately below B (step S1701: Yes), the process in step S1702 and the subsequent steps are performed on the json objects as the processing target. On the other hand, if there are no json objects (b) immediately below B (step S1701: No), on the other hand, the process comes to an end.

In step S1702, the duplication determination unit 102 first acquires an attribute value v of b as GETVALUE(b) (step S1702). Next, the duplication determination unit 102 determines whether v is a json object (step S1703). If v is a json object (step S1703: Yes), the duplication determination unit 102 recursively executes EXTRACTLEAFNODES(A, v) (step S1704), and returns to the process in step S1701. On the other hand, if v is not a json object (step S1703: No), on the other hand, the duplication determination unit 102 determines whether v is a sequence (step S1705).

If v is a sequence (step S1705: Yes), the duplication determination unit 102 acquires all the elements e as GETELEMENTS(v) (step S1706). The duplication determination unit 102 then adds all the elements e as a character string as a source of A in APPEND(A, e) (step S1707). If v is not a sequence, the duplication determination unit 102 then repeats the addition of a v character string as a source of A in APPEND (A, e) (a loop of Yes in step S1707 and step S1708) . After all the elements e are added (step S1707: No), the duplication determination unit 102 returns to the process in step S1701. Meanwhile, if v is not a sequence in step S1705 (step S1705: No), v is added as a source of A in APPEND(A, v) (step S1709), and the process returns to step S1701.

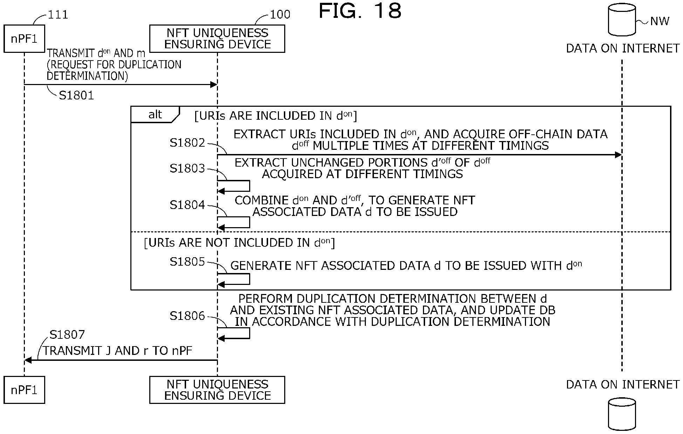

FIG. 18 is a sequence diagram of a specific example of a process according to Example 1 of the NFT uniqueness ensuring device. FIG. 18 illustrates the process from the duplication determination request till the notification of the duplication determination result described above with reference to FIGS. 13A to 17. As illustrated in FIG. 18, when requesting duplication determination, the nPF 111 transmits on-chain data d^{on} and the meta-information m thereof to the NFT uniqueness ensuring device 100 (step S1801). Next, if URIs are included in the on-chain data, the NFT uniqueness ensuring device 100 extracts the URIs included in the received on-chain data d^{on}, and acquires off-chain data d^{off} from NW a plurality of times at different timings (step S1802). After that, the NFT uniqueness ensuring device 100 extracts the unchanged portions d'^{off} of the off-chain data d^{off} acquired at different timings (step S1803). After that, the NFT uniqueness ensuring device 100 combines the on-chain data d^{on} and the unchanged portions d'^{off} of the off-chain data, to generate the NFT associated data to be issued (step S1804).

On the other hand, if the on-chain data does not include any URI, the NFT uniqueness ensuring device 100 generates the NFT associated data d to be issued with the on-chain data d^{on} (step S1805) . After that, the NFT uniqueness ensuring device 100 performs duplication determination between the NFT associated data d and the existing NFT associated data Dx, and updates the DB 103 in accordance with the duplication determination (step S1806). The NFT uniqueness ensuring device 100 then transmits a set J of NFT associated data and a determination result r to the nPF 111 (step S1807).

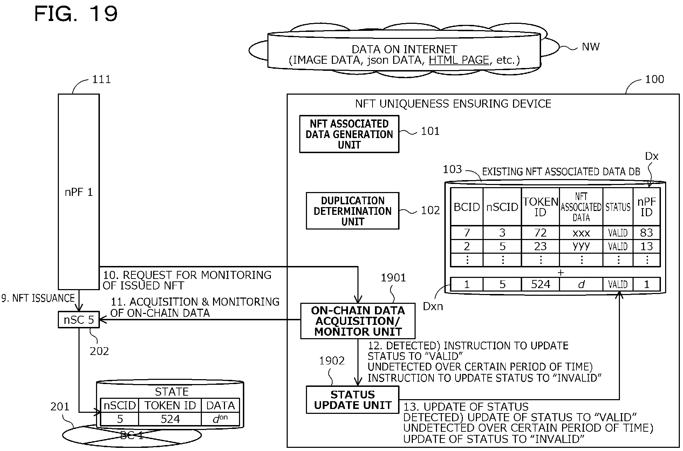

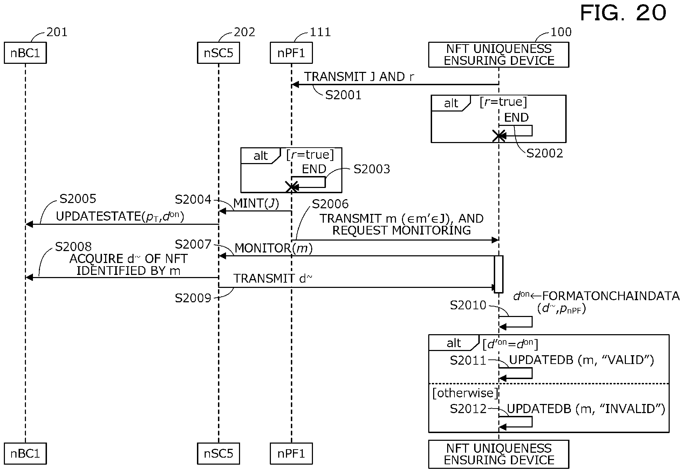

FIG. 19 is a configuration diagram for explaining a specific process according to Example 1 of the NFT uniqueness ensuring device. FIG. 20 is a sequence diagram of a specific example of a process according to Example 1 of the NFT uniqueness ensuring device. In FIG. 19, the same components and the same processes as those in the NFT uniqueness ensuring device 100 of Example 1 illustrated in FIG. 12 and others are denoted by the same reference numerals as those in FIG. 12 and others.

A specific example of a process from issuance of an NFT till actual addition of NFT associated data to be issued is now described with reference to FIGS. 19 and 20. As illustrated in FIG. 19, the NFT uniqueness ensuring device 100 includes an on-chain data acquisition/monitor unit 1901 and a status update unit 1902, in addition to the NFT associated data generation unit 101 and the duplication determination unit 102. The on-chain data acquisition/monitor unit 1901 acquires and monitors on-chain data from the nPF 1 (111). The status update unit 1902 updates the NFT associated data to be issued in the DB 103. The on-chain data acquisition/monitor unit 1901 and the status update unit 1902 perform the process after duplication determination as to the NFT to be issued as illustrated in 1. to 8 in FIG. 12 and FIGS. 13A to 17 described above.

Here, in the DB 103 in FIG. 12, the NFT associated data Dxn to be provisionally registered and issued is illustrated. It is assumed that a record in which the BCID is "1", the nSCID is "5", the token ID is "524", the NFT associated data is "d", the status is "reserved", and the nPFID is "1" is added to the NFT associated data Dxn to be issued.

As illustrated in FIG. 19, the nPF 1 (111) indicated by the nPFID "1" of the NFT associated data Dxn to be issued in 9. requests the nSC 5 (202) having a BCID "1" and a nSCID "5" to issue a new NFT. At this point of time, as illustrated in FIG. 20, the NFT uniqueness ensuring device 100 transmits a set J of NFT associated data and a determination result r of the duplication determination to the nPF 1 (111) (corresponding to step S2001 and step S1807).

The NFT uniqueness ensuring device 100 checks r, and checks the presence/absence of duplication (true/false) (step S2002). Also, the nPF 1 (111) checks the received r (step S2003), and does not issue the NFT in a case where "there is duplication", but performs the process in 10. and the subsequent processes in a case where "there is no duplication".

The nPF 1 (111) requests the NFT uniqueness ensuring device 100 to monitor the issued NFT in 10. At this point of time, the nPF 1 (111) executes a MINT function using J as an argument (step S2004), and issues an NFT with a token IDp_{T} and on-chain data d^{on} via the nSC 5 (202) in BC (step S2005).

After that, the NFT uniqueness ensuring device 100 (the on-chain data acquisition/monitor unit 1901) acquires and monitors the on-chain data in 11. At this point of time, the nPF 1 (111) transmits m to the NFT uniqueness ensuring device 100, and requests monitoring of the NFT (step S2006). The NFT uniqueness ensuring device 100 (the on-chain data acquisition/monitor unit 1901) that has received the monitor request monitors the corresponding NFT on-chain data d~ using a MONITOR function over a certain period of time (step S2007). The nSC 5 (202) acquires d~ of the NFT identified by m from the nBC 1 (201) (step S2008). The nSC 5 (202) transmits d~ of the acquired NFT to the NFT uniqueness ensuring device 100 (step S2009).

After that, the NFT uniqueness ensuring device 100 (the on-chain data acquisition/monitor unit 1901) instructs the status update unit 1902 to perform control to update the DB 103 in accordance with a detected or undetected status of the corresponding NFT on-chain data, as in 12. Here, in a case where d~ is detected, or after a certain period of time has elapsed, the NFT uniqueness ensuring device 100 (the on-chain data acquisition/monitor unit 1901) shapes d~ with a FORMATONCHAINDATA function, to obtain d'^{on} (step S2010). The NFT uniqueness ensuring device 100 (the on-chain data acquisition/monitor unit 1901) then updates the status in the DB 103 via the status update unit 1902 in 13. Here, the NFT uniqueness ensuring device 100 (the on-chain data acquisition/monitor unit 1901) detects d~, and, in a case where d'^{on} = d^{on}, the status of the NFT is set to "valid" with an UPDATEDB function, and is actually added to the DB 103 (step S2011). In this addition, Dxn in the DB 103 in FIG. 19 is additionally updated. On the other hand, in a case where d'^{on} = d^{on} is not satisfied, the NFT uniqueness ensuring device 100 (the on-chain data acquisition/monitor unit 1901) sets the status of the NFT to "invalid", and updates the status in the DB.

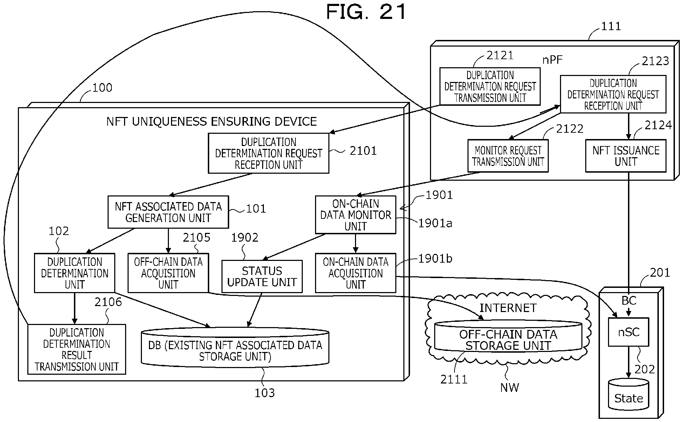

FIG. 21 is a diagram illustrating an example system configuration of Example 1 of the NFT uniqueness ensuring device. FIG. 21 is a diagram illustrating the internal configurations of the NFT uniqueness ensuring device 100, the nPF 111, and the BC 201 corresponding to Example 1 described above. In FIG. 21, the same components as described above are denoted by the same reference numerals as above, and the principal data flows between the respective components are illustrated.

The NFT uniqueness ensuring device 100 is communicably connected to each of the nPF 111, the BC 201, and NW. The NFT uniqueness ensuring device 100 includes the NFT associated data generation unit 101, the duplication determination unit 102, and the DB 103. Further, the NFT uniqueness ensuring device 100 includes a duplication determination request reception unit 2101, the on-chain data acquisition/monitor unit 1901, a status update unit 1902, an off-chain data acquisition unit 2105, and a duplication determination result transmission unit 2106. In FIG. 21, the on-chain data acquisition/monitor unit 1901 has a configuration separated into an on-chain data monitor unit 1901a and an on-chain data acquisition unit 1901b.

The duplication determination request reception unit 2101 receives a duplication determination request regarding the corresponding NFT from the nPF 111. At the time of the duplication determination request, if there is off-chain data to be associated with the corresponding on-chain data, the NFT associated data generation unit 101 associates the on-chain data with the off-chain data, to generate NFT associated data. The NFT associated data generation unit 101 then stores the generated NFT associated data in the DB 103. The off-chain data acquisition unit 2105 acquires the corresponding off-chain data from NW.

The on-chain data monitor unit 1901a monitors the corresponding on-chain data, based on a monitor request from the nPF 111. The on-chain data acquisition unit 1901b acquires the corresponding on-chain data from the nSC 202 of the BC 201. The status update unit 1902 performs a status update due to a change or the like in the corresponding on-chain data. The off-chain data acquisition unit 2105 acquires the off-chain data corresponding to on-chain data from an off-chain data storage unit 2111 in NW such as the Internet. The duplication determination result transmission unit 2106 transmits, to the nPF 111, a result of NFT duplication determination performed by the duplication determination unit 102.

The nPF 111 includes a duplication determination request transmission unit 2121, a monitor request transmission unit 2122, a duplication determination result reception unit 2123, and an NFT issuance unit 2124. The duplication determination request transmission unit 2121 transmits, to the NFT uniqueness ensuring device 100, a request for duplication determination as to the NFT to be issued. The monitor request transmission unit 2122 transmits a request for monitoring of on-chain data to the NFT uniqueness ensuring device 100. The duplication determination result reception unit 2123 receives an NFT duplication determination result from the NFT uniqueness ensuring device 100. The NFT issuance unit 2124 issues an NFT not having any duplication of the existing NFTs, based on the NFT duplication determination result received by the duplication determination result reception unit 2123.

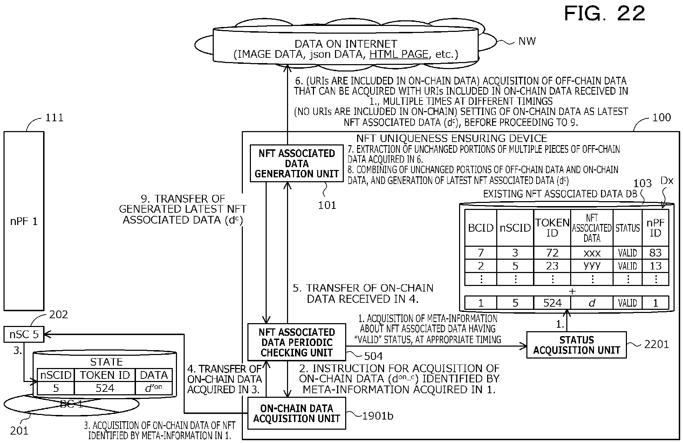

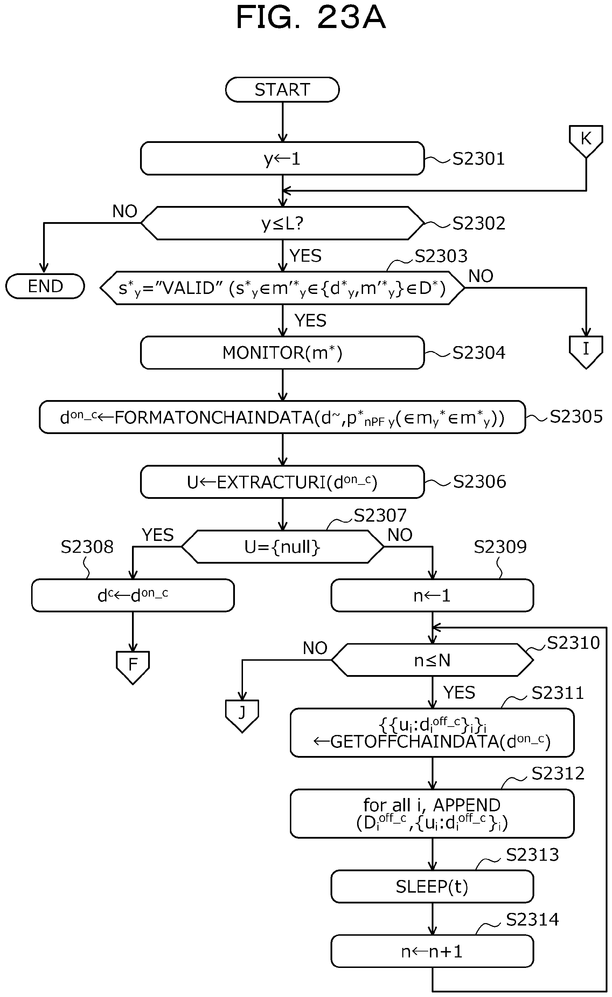

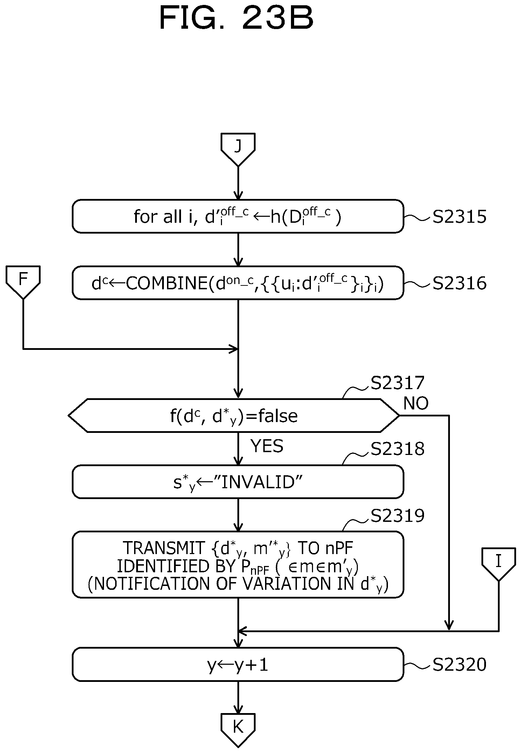

FIG. 22 is a configuration diagram for explaining a specific process according to Example 2 of the NFT uniqueness ensuring device. FIGS. 23A and 23B are a flowchart of the specific example of the process according to Example 2 of the NFT uniqueness ensuring device. In FIG. 22, the same components and the same processes as those in the NFT uniqueness ensuring device 100 of Example 1 illustrated in FIG. 12 and others are denoted by the same reference numerals as those in FIG. 12 and others.

Regarding each piece of the NFT associated data (on-chain data and off-chain data), the NFT uniqueness ensuring device 100 of Example 2 acquires the latest NFT associated data at appropriate timing, and performs comparison, to detect variation in the NFT associated data over the lapse of time or the like.

Referring to FIGS. 22, 23A, and 23B, a specific example of the process from acquisition of the existing NFT associated data till generation of the latest NFT associated data is described.

As illustrated in FIG. 22, in the NFT uniqueness ensuring device 100 of Example 2, the NFT associated data periodic checking unit 504 acquires meta-information about NFT associated data Dx with a "valid" status at appropriate timing in 1. Next, in 2., the NFT associated data periodic checking unit 504 instructs the on-chain data acquisition unit 1901b to acquire the on-chain data d^{on_c} identified by the meta-information acquired in the above 1. The on-chain data acquisition unit 1901b then acquires the on-chain data of the NFT identified by the meta-information from the nSC 5 (202) in 3.

Next, in 4., the on-chain data acquisition unit 1901b transfers the on-chain data acquired in the above 3. to the NFT associated data periodic checking unit 504. Next, in 5., the NFT associated data periodic checking unit 504 transfers the on-chain data received in the above 4. to the NFT associated data generation unit 101. In a case where there are URIs in the on-chain data, the NFT associated data generation unit 101 then acquires the off-chain data that can be acquired with the URIs included in the on-chain data received in the above 1., from NW a plurality of times at different timings. On the other hand, in a case where there are no URIs in the on-chain data, the NFT associated data generation unit 101 sets the on-chain data as the latest NFT associated data, and moves on to the process in 9. described below.

Next, the NFT associated data generation unit 101 performs 7. extraction of unchanged portions of a plurality of pieces of the off-chain data acquired in the above 6., and 8. combining of the unchanged portions of the off-chain data and the on-chain data, to generate the latest NFT associated data d^{c}. The NFT associated data generation unit 101 then performs 9. transfer of the generated latest NFT associated data d^{c} to the NFT associated data periodic checking unit 504.

The processes from 1. to 9. in FIG. 22 are described with reference to the flowchart in FIGS. 23A and 23B. First, the NFT associated data periodic checking unit 504 sets the variable y to 1 (step S2301), and determines whether y ≤ L (L: the number of pieces of the NFT associated data Dx having the "valid" status in the DB 103) (step S2302). If y ≤ L is satisfied (step S2302: Yes), the NFT associated data periodic checking unit 504 performs the process in step S2303. If y ≤ L is not satisfied (step S2302: No), the NFT associated data periodic checking unit 504 ends the process.

In step S2303, the NFT associated data periodic checking unit 504 determines one piece of currently-focused NFT associated data {d*y, m'*y} among all the data having the "valid" status in the existing NFT associated data Dx from the DB 103 (step S2303). The NFT associated data periodic checking unit 504 performs the process in step S2304 and the subsequent steps on the currently-focused NFT associated data {d*y, m'*y} (step S2303: Yes). On the other hand, as for the NFT associated data other than the currently-focused NFT associated data {d*y, m'*y} (step S2303: No), the NFT associated data periodic checking unit 504 moves on to the process in step S2320 (FIG. 23B) .

In step S2304, the NFT associated data periodic checking unit 504 acquires, from the on-chain data acquisition unit 1901b, the on-chain data d~ of the NFT identified by m*y (∈ m'*y) with a MONITOR function (step S2304). The NFT associated data periodic checking unit 504 then performs shaping using a FORMATONCHAINDATA function in the format of p_{nPF} y, to obtain d^{on_c} (step S2305) .

Next, the NFT associated data periodic checking unit 504 extracts the URIs in d^{on_c} with an EXTRACTURI function, and sets a set U having the URIs as sources (step S2306). The NFT associated data periodic checking unit 504 then determines whether U is an empty set ({null}) (step S2307). If U is an empty set ({null}) (step S2307: Yes), the NFT associated data periodic checking unit 504 moves on to the process in step S2308. If U is not an empty set (step S2307: No), the NFT associated data periodic checking unit 504 moves on to the process in step S2309.

In step S2308, since no URIs are included in d^{on_c}, the NFT associated data periodic checking unit 504 sets d^{on_c} as the latest NFT associated data d^{c} (step S2308), and moves on to the process in step S2317.

In step S2309, since URIs are included in d^{on_c}, the NFT associated data periodic checking unit 504 sets 1 to the variable n (step S2309), and determines whether n ≤ N (step S2310). If n ≤ N (step S2310: Yes), the NFT associated data periodic checking unit 504 repeats the processes in steps S2311 to S2314. On the other hand, if n ≤ N is not satisfied (step S2310: No), on the other hand, the NFT associated data periodic checking unit 504 moves on to the process in step S2315 (FIG. 23B).

In step S2311, the NFT associated data periodic checking unit 504 performs processing of GETOFFCHAINDATA(d^{on_c}) (step S2311). The NFT associated data periodic checking unit 504 then adds the off-chain data dᵢ^{off_c} for each uᵢ to Dᵢ^{off_c} with APPEND (Dᵢ^{off_c}, {uᵢ^{_c}:dᵢ^{off_c}}ᵢ) (step S2312).

Also, the NFT associated data periodic checking unit 504 acquires off-chain data at different timings, by executing SLEEP(t) between processes each time (step S2313). Next, the NFT associated data periodic checking unit 504 increments the variable n (step S2314), and returns to step S2310. If the range of the determination condition n ≤ N is exceeded in step S2310 (step S2310: No), the NFT associated data periodic checking unit 504 moves on to the process in step S2315.

In step S2315 indicated in FIG. 23B, the NFT associated data periodic checking unit 504 extracts the unchanged portions with h(Dᵢ^{off_c}), and sets the final off-chain data with the return value d'ᵢ^{off_c} (step S2315). The NFT associated data periodic checking unit 504 then sets the return value obtained by executing COMBINE(d^{on_c}, {{uᵢ:d'ᵢ^{off_c}}ᵢ}ᵢ) as d^{c} (step S2316).

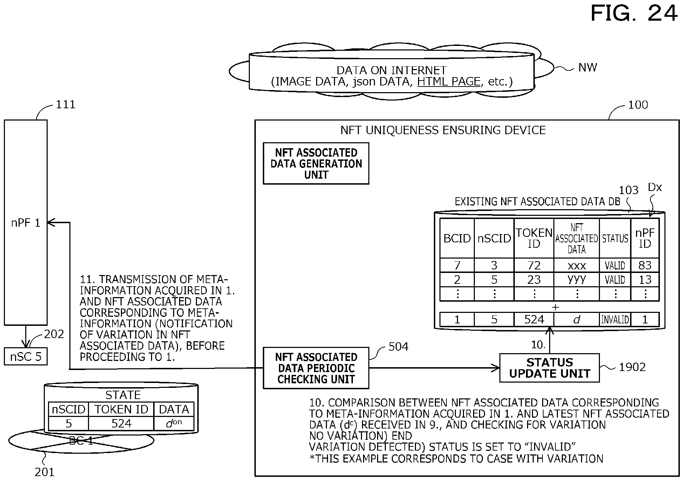

FIG. 24 is a configuration diagram for explaining a specific process according to Example 2 of the NFT uniqueness ensuring device. In FIG. 24, the same components and the same processes as those in FIG. 22 are denoted by the same reference numerals as those in FIG. 22. After the processes illustrated in 1. to 9. in FIG. 22 and FIGS. 23A and 23B, the NFT uniqueness ensuring device 100 performs the processes in 10. and 11. illustrated in FIG. 24.

Referring to FIG. 24 and FIG. 23B, a specific example of the process from the checking of variation in the NFT associated data till the notification of variation to the nPF 1 (111) is now described. In 10., the NFT associated data periodic checking unit 504 of the NFT uniqueness ensuring device 100 illustrated in FIG. 24 compares the NFT associated data corresponding to the meta-information acquired in the above 1. with the latest NFT associated data d^{c} received in the above 9., and checks variation in the NFT associated data. In 11., the NFT associated data periodic checking unit 504 then transmits the meta-information acquired in the above 1. and the NFT associated data corresponding to the meta-information, as a NFT associated data variation notification to the nPF 1 (111). After that, the NFT uniqueness ensuring device 100 returns to the process in 1. described above (FIG. 22).

At this point of time, as illustrated in FIG. 23B, the NFT associated data periodic checking unit 504 of the NFT uniqueness ensuring device 100 performs duplication determination between d^{c} and d*y with the function f (step S2317). When it is determined that there is duplication (step S2317: Yes), the NFT associated data periodic checking unit 504 moves on to the process in step S2318. When it is determined that there is no duplication (step S2317: No), the NFT associated data periodic checking unit 504 moves on to the process in step S2320.

In step S2318, the NFT associated data periodic checking unit 504 sets s*y to "invalid" to cope with the case where there is duplication (step S2318). The NFT associated data periodic checking unit 504 then transmits {d*y, m'*y} to the nPF 1 (111) identified by p_{nPF}, and notifies the nPF 1 (111) of the variation in d*y (step S2319) .

Next, the NFT associated data periodic checking unit 504 increments the variable y (step S2320), and returns to the process in step S2302 (FIG. 23A).

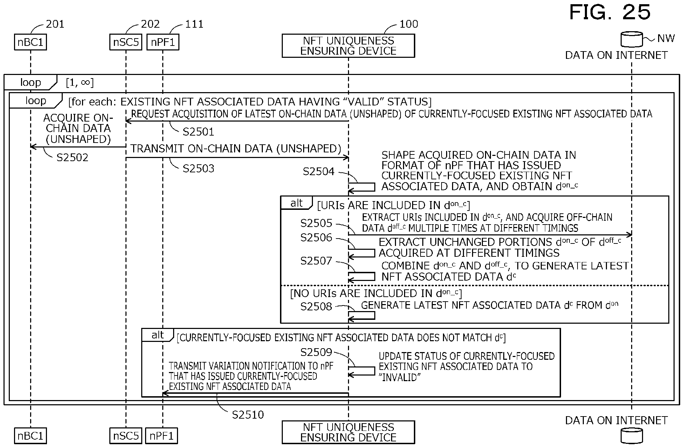

FIG. 25 is a sequence diagram of a specific example of a process according to Example 2 of the NFT uniqueness ensuring device. FIG. 25 illustrates a flow in a process between the respective devices corresponding to FIGS. 23A and 23B described above. First, the NFT uniqueness ensuring device 100 sets the existing NFT associated data whose status is "valid" in the DB 103 as the target, and requests the nSC 5 (202) to acquire the latest on-chain data of the currently-focused existing NFT associated data (step S2501).

Next, the nSC 5 (202) acquires on-chain data from the nBC 1 (201) (step S2502), and transmits the acquired on-chain data to the NFT uniqueness ensuring device 100 (step S2503).

The NFT uniqueness ensuring device 100 shapes the unshaped on-chain data acquired in the format of the nPF that has issued the currently-focused existing NFT associated data, into the json format, and sets the shaped data as d^{on_c} (step S2504).

Next, if identifiers (URIs) are included in d^{on_c}, the NFT uniqueness ensuring device 100 extracts the URIs included in d^{on_c}, and acquires the off-chain data d^{off_c} a plurality of times at different timings (step S2505). Next, the NFT uniqueness ensuring device 100 performs difference comparison between the plurality of pieces of d^{off_c} acquired at different timings, and extracts data of unchanged portions (step S2506). The NFT uniqueness ensuring device 100 then combines the on-chain data d^{on_c} and the off-chain data d^{off_c}, to generate the latest NFT associated data d^{c} (step S2507), and moves on to the process in step S2509.

On the other hand, if no identifiers (URIs) are included in d^{on_c}, on the other hand, the NFT uniqueness ensuring device 100 generates the latest NFT associated data d^{c} from the on-chain data d^{on} (step S2508), and moves on to the process in step S2509.

In step S2509, the NFT uniqueness ensuring device 100 determines whether the currently-focused existing NFT associated data and d^{c} do not match. If the determination result indicates no matching, the NFT uniqueness ensuring device 100 updates the status of the currently-focused existing NFT associated data to "invalid" (step S2509). A variation notification is then transmitted to the nPF 1 (111) that has issued the currently-focused existing NFT associated data (step S2510) . Note that, in a case where the determination result indicates matching, a variation notification indicating that there is no variation may be transmitted to the nPF 1 (111).

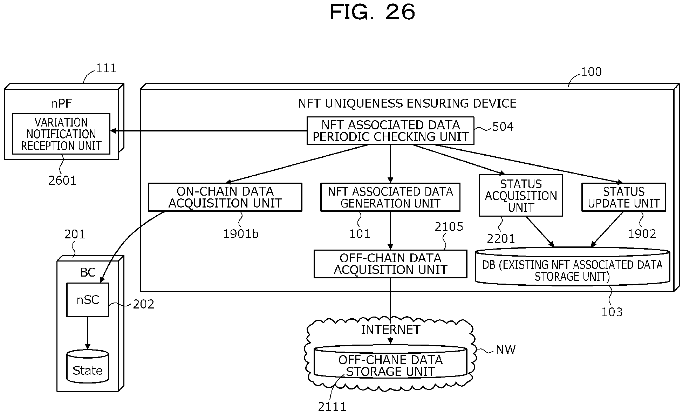

FIG. 26 is a diagram illustrating an example system configuration of Example 2 of the NFT uniqueness ensuring device. FIG. 26 is a diagram illustrating the internal configurations of the NFT uniqueness ensuring device 100, the nPF 111, and the BC 201 corresponding to Example 2 described above. In FIG. 26, the same components as described above are denoted by the same reference numerals as above, and the principal data flows between the respective components are illustrated.

The NFT associated data periodic checking unit 504 acquires, from the DB 103, the meta-information about the NFT associated data having the "valid" state, in response to a status acquisition unit 2201 at appropriate timing. Also, the NFT associated data periodic checking unit 504 instructs the on-chain data acquisition unit 1901b to acquire the on-chain data identified by the meta-information. The on-chain data acquisition unit 1901b then acquires the on-chain data of the NFT identified by the meta-information from the nSC 202, and transfers the acquired on-chain data to the NFT associated data periodic checking unit 504.

The NFT associated data periodic checking unit 504 transfers the received on-chain data to the NFT associated data generation unit 101. In a case where the on-chain data includes URIs, the NFT associated data generation unit 101 acquires the off-chain data that can be acquired with the URIs included in the on-chain data from the off-chain data storage unit 2111 in NW, in response to the off-chain data acquisition unit 2105.

The NFT associated data generation unit 101 combines the acquired off-chain data and the on-chain data to generate the latest NFT associated data, and transfers the generated latest NFT associated data to the NFT associated data periodic checking unit 504.

The NFT associated data periodic checking unit 504 compares the NFT associated data corresponding to the acquired meta-information with the latest NFT associated data, performs duplication determination based on variation in the NFT associated data, and transmits a result of the duplication determination (a variation notification) to a variation notification reception unit 2610 of the nPF 111. Also, the NFT associated data periodic checking unit 504 updates the "status" in the DB 103 for the status update unit 1902, depending on a detected or undetected status of the corresponding NFT on-chain data, based on NFT issuance by the nPF 111.

The NFT uniqueness ensuring device 100 of the embodiment described so far stores the information associated with NFTs already issued on a blockchain as the existing NFT associated data in a storage unit. At a time of issuance of a new NFT, the NFT uniqueness ensuring device 100 then performs a first determination process of comparing the data content of the NFT associated data of the new NFT to be issued and the data content of the existing NFT associated data, and determining presence or absence of duplication between the NFT associated data of the new NFT and the existing NFT associated data. For example, the NFT uniqueness ensuring device 100 permits issuance of an NFT having new NFT associated data only in a case where there is no duplication. In this manner, issuance of a replicated NFT by another smart contract (SC) can be prevented in advance, for example, and uniqueness of the NFT at a time of issuance of a new NFT by an NFT issuance platform (PF) can be ensured.

Also, in the NFT uniqueness ensuring device 100, the first determination includes a process of generating new NFT associated data by combining the on-chain data recorded in the NFT with the off-chain data identified by the on-chain data. As a result, it becomes possible to perform duplication determination on new NFT associated data associated with off-chain data related to on-chain data such as duplication determination coping with variation in data content of off-chain data.

Also, in the NFT uniqueness ensuring device 100, the first determination includes a process of acquiring off-chain data a plurality of times at different timings, comparing differences between the plurality of pieces of the acquired off-chain data, and extracting off-chain data including unchanged portions by deleting the difference portions. For example, off-chain data is data that is written in HTML and is held on a network identified by the on-chain data. Thus, the off-chain data copes with HTML or the like that changes with the lapse of time, and duplication determination can be accurately performed using the unchanged portions of the extracted off-chain data.

Also, the NFT uniqueness ensuring device 100 performs a second determination process of comparing the data content of the existing NFT associated data with the data content of the latest NFT associated data for each piece of the existing NFT associated data stored in the storage unit at each predetermined timing, and determining presence or absence of duplication between the latest NFT associated data and the existing NFT associated data. In the second determination, the NFT uniqueness ensuring device 100 determines the presence or absence of duplication, based on the presence or absence of temporal variation in the off-chain data identified by the on-chain data of the existing NFT associated data, for example. Thus, the NFT uniqueness ensuring device 100 can periodically perform duplication determination on the existing NFT associated data recorded in its own DB, and always keep the content of the existing NFT associated data stored in the DB in the latest state.

Further, the NFT uniqueness ensuring device 100 outputs a result of the first determination or the second determination. For example, the NFT uniqueness ensuring device 100 outputs a result of the first determination or the second determination to a PF, so that the PF can ensure uniqueness of the NFT every time a new NFT is issued, based on the result of the duplication determination. More specifically, in the first determination, the NFT uniqueness ensuring device 100 performs the process based on reception of a duplication determination request from the PF scheduled to issue an NFT at the time of issuance of an NFT from the PF, and transmits a result of the first determination to the PF. In the second determination, the NFT uniqueness ensuring device 100 performs the process at each predetermined timing, and transmits a result of the second determination to the PF that has issued the NFT associated data. The PF can ensure uniqueness of the NFT every time a new NFT is issued, based on the duplication determination result from the NFT uniqueness ensuring device 100.

In view of the above, according to the embodiment, the NFT uniqueness ensuring device 100 can prevent issuance of a replicated NFT by another SC in advance by the first determination process, and ensure uniqueness of the NFTs when a new NFT is issued at a PF. Also, by the second determination process, the NFT uniqueness ensuring device 100 can periodically perform duplication determination on the existing NFT associated data recorded in its own DB, to always keep the content of the existing NFT associated data stored in the DB in the latest state, and can ensure uniqueness of the NFTs when a new NFT is issued at a PF.

Note that it is possible to implement the NFT uniqueness ensuring method described in the embodiment of the present invention by causing a processor such as a server to execute a program prepared in advance. The present method is recorded on a computer-readable recording medium such as a hard disk, a flexible disk, a CD-ROM, a DVD, or a flash memory, and is read from the recording medium by a computer. In this manner, the present method is implemented. Furthermore, the present method may be distributed via a network such as the Internet.

### REFERENCE SIGNS LIST

100NFT uniqueness ensuring device
101 NFT associated data generation unit
102 duplication determination unit
103 DB (existing NFT associated data DB)
504 NFT associated data periodic checking unit
701 CPU
702 memory
704 disk
705 communication I/F
707 portable recording medium
1901 on-chain data acquisition/monitor unit
1902 status update unit
D1, d^{on}on-chain data
D2, d^{off} off-chain data
D3, d NFT associated data
NW network

## Claims

1. An NFT uniqueness ensuring program causing a computer to perform a process of:
storing information associated with a non-fungible token (NFT) already issued on a blockchain as existing NFT associated data in a storage unit; and
performing a first determination process of comparing data content of NFT associated data of a new NFT to be issued with data content of the existing NFT associated data at a time of issuance of the new NFT, and determining presence or absence of duplication between the NFT associated data of the new NFT and the existing NFT associated data.

2. The NFT uniqueness ensuring program according to claim 1, wherein
the first determination includes a process of
generating the new NFT associated data by combining on-chain data recorded in the NFT and off-chain data identified by the on-chain data.

3. The NFT uniqueness ensuring program according to claim 2, wherein
the first determination includes a process of:
acquiring the off-chain data a plurality of times at different timings; and
performing difference comparison between a plurality of pieces of the acquired off-chain data, and extracting the off-chain data that has an unchanged portion by deleting a difference portion.

4. The NFT uniqueness ensuring program according to claim 3, wherein the off-chain data is data that is written in HTML and is held on a network identified by the on-chain data.

5. The NFT uniqueness ensuring program according to claim 1, wherein the process further includes
outputting a result of the first determination.

6. The NFT uniqueness ensuring program according to claim 5, wherein
the outputting is
outputting a result of the first determination to an issuer of the NFT.

7. The NFT uniqueness ensuring program according to claim 1, wherein the process includes a process of
second determination of comparing data content of the existing NFT associated data with data content of latest NFT associated data for each piece of the existing NFT associated data stored in the storage unit at each predetermined timing, and determining presence or absence of duplication between the latest NFT associated data and the existing NFT associated data.

8. The NFT uniqueness ensuring program according to claim 7, wherein
the second determination includes
determining presence or absence of duplication, based on presence or absence of variation in off-chain data identified by on-chain data of the existing NFT associated data.

9. The NFT uniqueness ensuring program according to claim 7, wherein the process further includes
outputting a result of the second determination.

10. The NFT uniqueness ensuring program according to claim 7, wherein the process further includes:
performing the first determination process based on reception of a duplication determination request from an NFT issuance platform when the NFT issuance platform issues an NFT, and transmitting a result of the first determination to the NFT issuance platform, and
performing the second determination process at each predetermined timing, and transmitting a result of the second determination to the NFT issuance platform that has issued the NFT associated data.

11. An NFT uniqueness ensuring method comprising:
storing information associated with a non-fungible token (NFT) already issued on a blockchain as existing NFT associated data in a storage unit; and
performing a first determination process of comparing data content of NFT associated data of a new NFT to be issued with data content of the existing NFT associated data at a time of issuance of the new NFT, and determining presence or absence of duplication between the NFT associated data of the new NFT and the existing NFT associated data.

12. An NFT uniqueness ensuring device comprising:
a storage unit configured to store information associated with a non-fungible token (NFT) already issued on a blockchain as existing NFT associated data in a storage unit; and
a control unit configured to perform a first determination process of comparing data content of NFT associated data of a new NFT to be issued with data content of the existing NFT associated data at a time of issuance of the new NFT, and determine presence or absence of duplication between the NFT associated data of the new NFT and the existing NFT associated data.

13. The NFT uniqueness ensuring device according to claim 12, wherein the control unit:
performs a second determination of comparing data content of the existing NFT associated data with data content of latest NFT associated data for each piece of the existing NFT associated data stored in the storage unit at each predetermined timing, and determines presence or absence of duplication between the latest NFT associated data and the existing NFT associated data.
